(19) **Europäisches Patentamt / European Patent Office / Office européen des brevets**

(11) **EP 1 920 595 B1**

(12) **EUROPEAN PATENT SPECIFICATION**

(45) Date of publication and mention
of the grant of the patent:
**09.03.2016 Bulletin 2016/10**

(51) Int Cl.:
***H04N 3/14*** *(2006.01)*

(21) Application number: **06819052.9**

(22) Date of filing: **02.08.2006**

(86) International application number:
**PCT/EP2006/064967**

(87) International publication number:
**WO 2007/025832 (08.03.2007 Gazette 2007/10)**

(54) **APPARATUS AND METHOD FOR IMAGING**

VORRICHTUNG UND VERFAHREN ZUR BILDGEBUNG

APPAREIL ET PROCÉDÉ D'IMAGERIE

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.08.2005 GB 0515991**

(43) Date of publication of application:
**14.05.2008 Bulletin 2008/20**

(73) Proprietor: **Thales Holdings UK Plc Addlestone, Surrey KT15 2NX (GB)**

(72) Inventors:
• **CRAIG, Robert Lawrence**
  **Paisley PA1 2DD (GB)**
• **HAINING, Andrew**
  **Glagow G41 4LX (GB)**

(74) Representative: **Round, Edward Mark**
  **Marks & Clerk LLP**
  **90 Long Acre**
  **London WC2E 9RA (GB)**

(56) References cited:
  **EP-A2- 0 483 530     FR-A1- 2 725 101**
  **GB-A- 2 319 426**

**Description**

The present invention relates to apparatus and methods for imaging, and particularly, though not exclusively, for the purposes of forming images from Infra-Red (IR) light.

Imaging cameras, such as thermal imaging cameras, incorporate a detector of radiation. This detector generally comprises an array of many pixel sensor elements each responsive to received electromagnetic radiation to produce a pixel signal. Imaging cameras process these pixel signals to generate or reconstruct an image of the scene viewed by the pixel sensor array of the camera.

A problem associated with such cameras is that individual detector elements may often be responsive to received radiation (e.g. Infra-Red (IR) radiation) in different ways such that one pixel sensor element may produce a pixel signal differing from the pixel signal produced by another pixel sensor element when both pixel sensors receive exactly the same radiation energy. This differing response characteristic as between pixel sensors, if not corrected, presents visible non-uniformities in the pixel sensor array output and hence ultimately in the reconstructed image generated by the camera. This presents a limit to the performance of the camera.

Further limitations of cameras of this type stem from the limit to the number of pixel sensors which may be arranged within a sensor array of a given area. Increasing this number enhances the resolution of the image generated by the camera, but at the cost of great expense and complexity of not only the pixel sensor array, but also the processing power and speed of the camera which would be required to process an increased volume of pixel signals, per image, as a consequence. Often, the limit of the extent to which individual pixel sensors may be miniaturised is dictated not only by technical capabilities, but also by the wavelength of the radiation to which the pixel sensors are intended to be responsive. For example, pixel sensors arranged to be responsive to IR radiation having a wavelength of between 8 and 10 microns are typically required to have a sensing area having a width of around 10 to 20 microns. This limits the number of pixel sensors which may be disposed upon a sensor array, and thereby often results in a sensor array that has insufficient elements to provide the required camera resolution.

The present invention aims to address at least some of the aforementioned deficiencies in the prior art.

At its most general, the present invention proposes displacing a part or parts of an image of a scene formable upon a pixel sensor array to cause that part(s) to coincide with different pixel sensors as well as areas of the array between sensors, and generating pixel signals in each case for use together in generating an image of the scene. Consequently, pixel signals derived from those different pixel sensors which have received the same part of the image may be compared with each other in order to determine any difference in pixel response which may subsequently be corrected for in order to remove visible non-uniformities in the output of a camera employing the invention. Similarly, pixel sensor outputs corresponding to those occasions in which the image part is located between pixel sensors may be employed in generating image data which, in combination with image data derived from the signals of pixels in receipt of the same part of the image, represents an image of the scene at enhanced resolution.

The present invention is particularly, though not exclusively, concerned with electromagnetic radiation covering a range of wavelengths including Infra-Red light, visible light, Ultra-Violet (UV) light, and shorter wavelengths such as X-rays. Of course, this list is not to be regarded as exhaustive.

According to a first aspect of the present invention, there is provided a device as set out in claim 1.

Preferably, the directing means is operable to form a focussed image of the scene upon pixel sensors of the sensor means. However, the device may operate using de-focussed images of the scene if required. The directing means is preferably an optical means including one or more optical elements (lenses or/and mirrors) operable to form an image of the scene using electromagnetic radiation received thereby.

The displacer means is preferably arranged to move one of the sensor means and the directing means relative to the other so as to displace the position of the part of the image. Preferably, the sensor means is relatively stationary (e.g. not moveable by the displacer means) and the directing means (or part of it) is actively moveable by the displacer means.

The displacer means is preferably arranged to displace the directing means (or a part of it) in a direction or directions parallel to the plane of focused images formable by the directing means. For example, the displacer means may displace in any one of, or in a combination of, a number of mutually perpendicular directions each of which is substantially parallel to the image plane of the directing means. Of course, the displacer means may also/alternatively be arranged to displace the directing means (or a part of it) in a direction perpendicular to the image plane of a directing means. In this way, the displacer means may displace the directing means (or a part of it) substantially across the array of pixel sensors of the sensor means, and/or towards or away from that array. The displacer means is preferably arranged to displace the position of at least a part of the directing means relative to the sensor array thereby to displace the part of the image formable upon the sensor array. The directing means may include a lens element or an optical train/succession of aligned lens elements forming a lens system for forming an image of a scene at the sensor means. Preferably the single lens, or a single lens element of the lens system is displaceable by the displacer means as described above. Of course, a plurality of lens elements of the lens system may be displaceable by the displacer means. Where the directing means includes mirrors, the same considerations apply thereto.

The displacer means is preferably arranged to successively reposition the part of the image in a succession of displacement steps including said positions.

For example, the displacer means may be arranged to scan the part of the image along a predetermined scan path across the array of pixel sensors in a succession of discrete scan steps in which some or all of the steps in question coincide with the aforementioned positions described above. Alternatively, the displacer means may be arranged to scan the part of the image in a continuous sweep across the array of pixel sensors following the scan path which intersects the aforementioned positions.

The positions preferably include positions substantially half way between neighbouring pixel sensors. For example, half way between the centres of neighbouring pixel sensors, or half way between adjacent peripheries/edges thereof.

For example, where the sensor means has a regular array of pixel sensors the centres of which are separated from those of neighbouring pixel sensors by predetermined separation or "pitch", the displacer means may be arranged to successively reposition the part of the image in a succession of half-pitch-sized displacement steps including the aforementioned positions. This has been found to produce pixel sensor signals from which generally the highest enhancements in image resolution may be achieved, as discussed below.

The positions may include positions coinciding with the locations of a given pixel sensor and a plurality of pixel sensors neighbouring the given pixel sensor.

For example, in displacing the directing means, the displacer means may be arranged to cause the part of the image in question to scan on to a group of neighbouring pixel sensors for the purposes of generating pixel signals therefrom for use in determining whether pixel sensor response non-uniformity is present and requires correction. By employing neighbouring pixel sensors, the displacer means may be required to impart only a minimal degree of displacement (e.g. minimal movement of the directing means) to acquire pixel signals suitable for use in non-uniformity correction. Of course, should the responses of each of the neighbouring pixel sensors, at which the same image part is located in this way, produce substantially exactly the same pixel sensor response, then this would indicate that no non-uniformity was present as between those neighbouring pixel sensors since each responded to the same incident radiance (the same image part) in the same way.

The displacer means is preferably arranged to successively reposition the part of the image to said other positions in a succession of displacement steps such that each step coincides with the location of any one of: a given pixel sensor; the location of a pixel sensor neighbouring the given pixel sensor, and; the location substantially half way between the given pixel sensor and a neighbouring pixel sensor, wherein said image part is repositioned to each such location during said succession of displacement steps.

For example, the displacer means may step the part of the image to successive positions upon the pixel sensor array which only coincide with any one of the above locations. This would mean that, during a succession of displacements, the part of the image in question would either be located at the given pixel sensor, a neighbouring pixel sensor, or a location substantially half way between the two. While the part of the image is located at a pixel sensor, the device may be arranged to form pixel sensor response non-uniformity evaluation calculations according to pixel signals received at that time, and while the part of the image is located half way between neighbouring pixel sensors, the device may be arranged to generate image data representing the scene at that time. The device may preferably generate image data at all displacement positions/locations, and non-uniformity evaluations may be performed at some or all such positions/locations.

The device may include signal processor means arranged to receive pixel signals generated by the sensor means at each of said positions, to compare the responses of pixel sensors to said part of the image when formed thereupon, and to generate data according to said comparison which represents an image of the scene using the responses of pixel sensors.

For example, the signal processing means may be arranged to adjust the data representing the response of a pixel sensor by an amount determined according to the pixel signals from neighbouring pixel sensors generated thereby in response to the same image part being positioned upon them. For example, the signal processor means may calculate the difference between the pixel signal of a given pixel sensor and the pixel signal of a different pixel sensor, such as a neighbouring pixel sensor, or the average of the pixel signals associated with a plurality of different (e.g. neighbouring) pixel sensors. The signal processor is then preferably arranged to generate image data representing the response of the given pixel sensor adjusted according to the difference value, such that the response represented by the data is substantially the same as the response of the other pixel sensor(s) with which the response of the given pixel was compared. This adjustment may simply amount to a reduction or increase in the value of the pixel signal so as to arrive at the adjusted pixel signal value, or may amount to multiplication of the original pixel signal value by a suitable correction factor to produce the same end effect. In this way pixel sensor response non-uniformity corrections may be applied to any number of "given" pixels as described above.

The displacer means may be operable to successively position the part of the image over a given pixel sensor, and the device may include a motion detector means (e.g. a function of the signal processor) arranged to receive successive pixel signals generated by the given pixel sensor in response to the image part, to compare the successive responses and to indicate the existence of movement of the imaged scene if the successive responses differ by more than a predetermined amount.

A motion detection algorithm may be used which, for example, looks at variation in output from every pixel sensor when at a central position of the image part displacement path (e.g. microscan pattern). This central position may be visited several times. If the output of the pixel sensor during subsequent visits changes by an amount greater than some appropriate threshold, that part of the scene is assumed to be moving. This threshold is typically set at about 3 times the system random noise.

Preferably the signal processor means is arranged to generate data representing an image of the scene using the responses of pixel sensors of the sensor means, according to not only the aforementioned comparison/difference between pixel sensor responses, but also according to the detected presence of movement of or within the imaged scene. For example, where such movement or motion of or within the scene is detected, the signal processor means may be arranged to reduce the aforementioned adjustment value or correction factor applied to a given pixel sensor signal as compared to the magnitude of the adjustment or correction which would be applied were no motion detected. This reduction may be a reduction by any value within the range 0% to 100% depending on the degree of detected movement and the effect it has on images reproduced/generated according to pixel sensor signals.

It is to be understood that this reduction factor assists in balancing the positive effect of correcting for pixel sensor response non-uniformity against the negative effect of motion of the whole or parts of the imaged scene being mistakenly interpreted as pixel sensor response non-uniformity. That is to say, differences in pixel sensor response, as between neighbouring pixels, may be in part due to changes in the common part of the image to which each pixel sensor is caused to respond, as well as (or instead of) being due to inherent response non-uniformity as between those two pixels.

The signal processing means is preferably arranged to modify according to the aforesaid comparison the data representing pixel signals received thereby from pixel sensors at which said image part was positioned, such that the pixel signals are represented as being substantially the same.

The signal processor means is preferably operable to generate said data using responses of pixel sensors both when said image part was positioned between pixel sensors and when said image part was positioned at the location of a pixel sensor thereby to enhance the resolution in the image.

For example, the signal processor may be arranged to generate a plurality of image data sets one or some of which contain image data representing the image of the scene viewed by the sensor means when the aforementioned image part was positioned between pixel sensors, and one or more of the other image data sets representing an image of the scene when the image part was positioned at the location of a pixel sensor. The signal processor means may be arranged to combine these two types of image data into a resolution-enhanced image data set representing an image which is a composite of the images of the aforementioned scene taken with the image part at various different positions on the pixel sensor array. The effect is to produce a resolution-enhanced image which appears as if it were produced by a pixel sensor array having pixel sensors positioned not only in the positions occupied by actual pixel sensors of the sensor means, but also having additional pixel sensors positioned at locations half way between neighbouring pixels of the sensor means.

Combination of image data sets, to produce a resolution-enhanced image data set, is preferably done by displaying the sub-images sequentially an appropriate positions on a display - e.g. as is done by a standard interlace television screen (TV), but in two dimensions (e.g. horizontal interlacing, plus vertical interlacing) rather than the one of the TV.

The sensor means is preferably arranged to control the pixel sensors to be unresponsive to electromagnetic radiation from the scene while the displacer means is displacing said image part from one position to a succeeding position.

In this way, the sensor means may be, in effect, shielded from electromagnetic radiation from the directing means while the image part in question is being moved across the pixel sensor array of the sensor means. This is particularly suited to embodiments in which the displacer means is operable to step the given image part in discrete steps across the pixel sensor array, and avoid the difficulties associated with spurious pixel signals generated by radiation incident upon them while the scene image is in motion across the pixel sensor array between successive positions.

The displacer means is preferably operable to hold stationary said part of the image at each of said positions for a finite dwell time sufficient for pixel sensors to respond to the electromagnetic radiation from the scene.

The pixel sensors of the sensor means may be solid-state pixel sensor devices, such as Charge Coupled Device (CCD) pixel sensors or MOS or CMOS pixel sensors.

Preferably, the displacer means is operable to displace the part of the image through a succession of positions starting at a first position, following with one or more different positions, and returning to the first position.

For example, the displacer means may scan, step or otherwise displace the image part cyclically through a repeating succession of positions and may exactly repeat a predetermined scan path across a predetermined sequence of positions across the pixel sensor array. This is particularly suitable for continuous such scanning enabling the continuous or repetitive application of image resolution enhancement and non- uniformity correction as discussed above.

According to a second aspect of the present invention, there is provided a device as set out in claim 32.

It is to be understood that the invention described above represents the implementation of a method for use in imaging a scene, and that this method is encompassed within the present invention.

According to a third aspect of the present invention, there is provided a method as set out in claim 17.

The method may include forming a focussed image of the scene upon pixel sensors of the sensor means, or a de-focussed image thereof.

Preferably the method includes successively repositioning the part of the image in a succession of displacement steps including said positions. The positions may include positions substantially half way between neighbouring pixel sensors. The positions may include positions coinciding with the location of a given pixel sensor and the location of a plurality of pixel sensors neighbouring the given pixel sensor.

The method preferably includes successively repositioning the part of the image to said other positions in a succession of displacement steps such that each step coincides with the location of any one of: a given pixel sensor; the location of a pixel sensor neighbouring the given pixel sensor, and; the location substantially half way between the given pixel sensor and a neighbouring pixel sensor, wherein said image part is repositioned to each such location during said succession of displacement steps.

Preferably, the method includes receiving pixel signals generated by the sensor means at each of said positions, comparing the responses of pixel sensors to said part of the image when formed thereupon, and generating data according to said comparison which represents an image of the scene using the responses of pixel sensors.

The generating of the data preferably uses responses of pixel sensors both when said image part was positioned between pixel sensors and when said image part was positioned at the location of a pixel sensor thereby to enhance the resolution in the image.

The method may include modifying according to the comparison the data representing pixel signals received thereby from pixel sensors at which said image part was positioned, such that the pixel signals are represented as being substantially the same.

In the method there may be included successively positioning the part of the image over a given pixel sensor, processing successive pixel signals generated by the given pixel sensor in response to said image part, comparing the successive responses and indicating the existence of movement of the imaged scene if said successive responses differ by more than a predetermined amount.

Preferably, the method includes controlling the pixel sensors to be unresponsive to electromagnetic radiation from the scene while said image part is being displaced from one position to a succeeding position.

The method may include holding stationary said part of the image at each of said positions for a finite dwell time sufficient for pixel sensors to respond to the electromagnetic radiation from the scene.

Preferably, the method includes displacing the part of the image through a succession of positions starting at a first position, following with one or more different positions, and returning to the first position.

In preferred embodiments, the method includes providing directing (e.g. optical) means for use in directing said electromagnetic radiation to form said image upon said pixel sensors, and displacing the position of at least a part of the directing means relative to the sensor array thereby to displace the part of the image formed upon the sensor array.

According to a fourth aspect of the present invention, there is provided a method as set out in claim 33.

Examples of the invention shall now be described with reference to the accompanying drawings in which:

Figure 1A schematically illustrates an imaging device for imaging Infra-Red (IR) radiation;
Figure 1B schematically illustrates the array of pixel sensor elements of an IR sensor array, and the pitch between neighbouring sensor elements;
Figure 2 schematically illustrates a sequence of positions upon the pixel sensor array of a sensor means through which a part of an image formed upon the sensor array is caused to be scanned;
Figure 3 schematically illustrates the scan pattern of the image part illustrated in Figure 2, together with a corresponding scan pattern of a neighbouring image part across the same pixel sensor array.

In the drawings, like articles are assigned like reference symbols for the purposes of consistency.

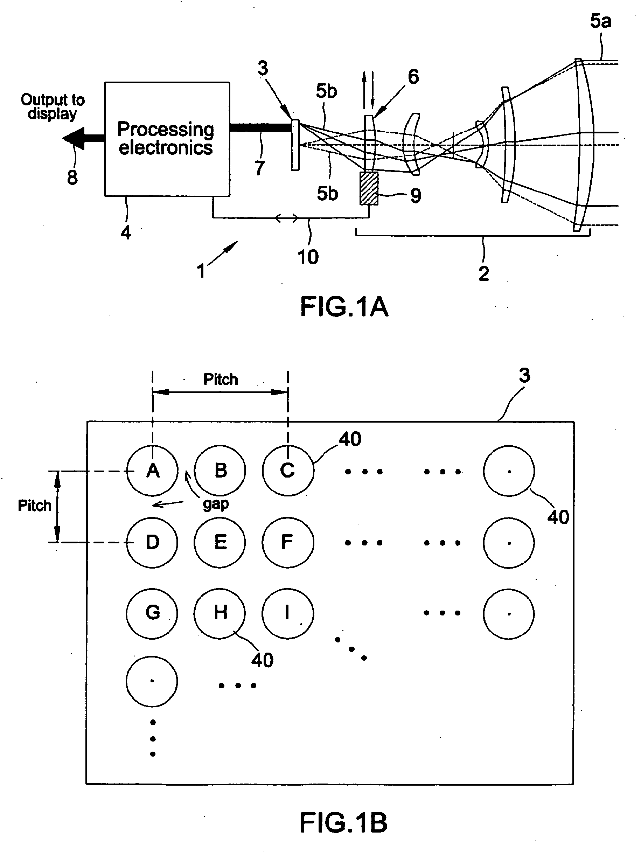

Figure 1A schematically illustrates a thermal (IR) imaging camera (1) including a system of optical lenses (2) for directing IR radiation (5a) incident upon the optical input aperture of the lens system, into a focused image (5b) within the optical image plane defined by the lens system. Consequently, the lens system (2) is arranged to form a real image of a viewed scene from IR radiation emanating from that scene.

The thermal imaging camera (1) also includes a two-dimensional array of infrared sensor elements collectively defining a two-dimensional IR sensor surface (3) positioned relative to the lens system (2) such that the sensor elements of the detector array each lie within the image plane defined by the lens system. Each sensor element of the array is responsive to IR radiation from the viewed scene, focused as an image upon the sensor array, to generate a pixel signal.

A pixel signal transmission line (7) operably connects the pixel sensor elements of the sensor array to a signal processing unit (4) of the thermal imaging camera thereby to convey pixel signals from the sensor array to the signal processing unit. The signal processing unit is arranged to process received pixel signals as will be described in more detail below, and to generate image data representing the image of the viewed scene formed upon the sensor array by the lens system (2), and to output the image date (8) to an image display system or screen of any suitable types such as would be readily apparent to the skilled person.

The thermal imaging camera (1) includes a displacer unit (9) in the form of a piezoelectric actuator unit coupled to the terminal lens element (6) of the lens system (2) of the camera. The displacer unit is responsive to displacement control signals (10) generated by the signal processing unit (4) to controllably displace the terminal lens element (6) of the lens system in a plane parallel to the image plane defined by the lens system. In this way, displacement of the terminal lens element (6) by the displacer unit (9) results in a corresponding displacement, in a direction parallel to the image plane, of the image (5b) of the viewed scene formed by the lens system at the IR sensor array (3). The signal processing unit (4) is operable to control the displacer unit to displace the terminal lens element by amounts sufficient to cause a predetermined shift in the position upon the sensor array (3) of parts of the image formed thereupon, by predetermined displacements.

In this way, the image (5b) of the viewed scene may be controllably moved, scanned or shifted across the array of pixel sensors of the thermal imaging camera under the control of the signal processing unit (4). In particular, the signal processing unit (4) is arranged to generate displacer control signals (10) to displace the whole image (5b) to cause displacement of the position of parts of the image formable upon the sensor array (3) from a position between pixel sensors of the array to other positions including positions coincident with the location of different pixel sensors on the array, and is further arranged to employ together pixel signals generated under both circumstances in order to generate image data when presenting the scene viewed by the camera.

The pixel sensor array of the camera comprises pixel sensors of substantially identical form and structure, each arranged in a respective one of a plurality of uniformly spaced positions forming a regular uniform pattern. The spacing or "pitch" between neighbouring pixel sensor positions exceeds the surface dimensions of each pixel sensor such that pixel-free regions or gaps exist on the pixel sensor array between neighbouring pixel sensors.

Figure 1B schematically illustrates the pixel sensor array comprising a plurality of separate and separated pixel sensors (40) arranged in a regular square array in which both the horizontal and vertical pitch between pixel sensors is the same and exceeds twice the radius of each pixel sensor (40) thereby leaving non-sensing gaps between pixel sensors.

The pixel sensor array may be a CCD sensor array or a MOS sensor array with each pixel sensor being of a dimension (e.g. diameter) having a value between about $10\mu$m to about $20\mu$m, preferably about $18\mu$m.

The pitch between neighbouring pixel sensors (40) exceeds the diameter of each pixel sensor thereby to result in a non-sensing gap between the boundaries of neighbouring pixel sensors. In the present example this gap is typically several micrometers in size e.g. $2\mu$m.

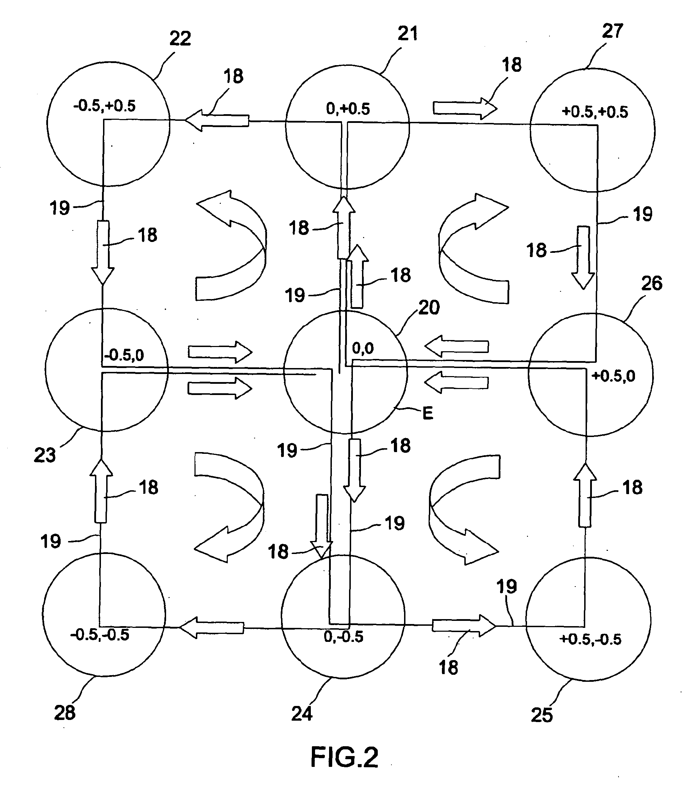

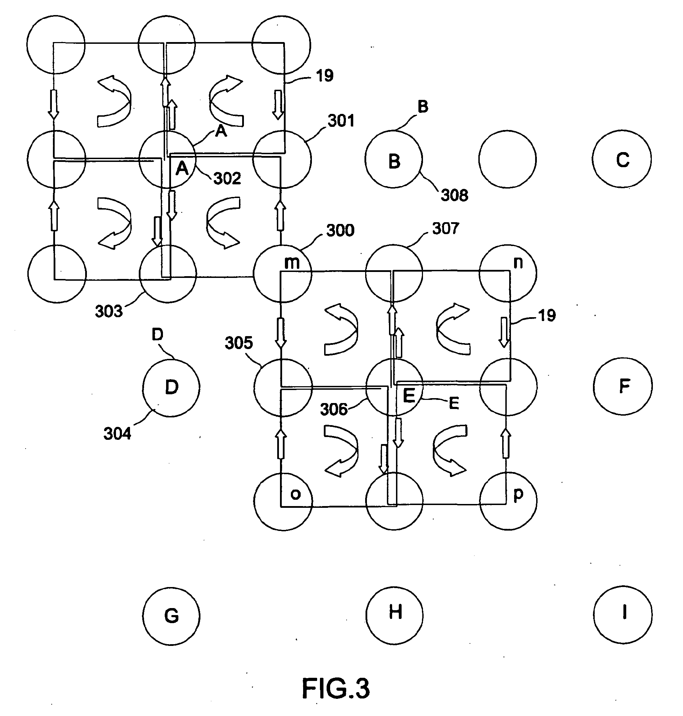

In Figure 1B, a square sub-array of nine neighbouring pixel sensors A. B, C, D, E, F, G, H and I is identified in which the gap by which each pixel sensor of the sub-array is separated horizontally and/or vertically from its nearest neighbours is the same for all members of the sub-array. This sub-array arrangement is representative of any part of the pixel sensor array as a whole and shall be referred to below with reference to Figures 2 and 3, but it should be understood that the following description applies equally to other parts (e.g. any or all parts) of the pixel sensor array (3) as a whole.

Figure 2 schematically illustrates a single pixel sensor (E) of the IR pixel sensor array of Figure 1B, together with a single given part of an image focused upon the signal array at each of a succession of positions (20-28) upon the array. The image part is represented as a circular dot in this schematic, as is the pixel sensor (E). Each position of the given image part is denoted with a relative coordinate value determined with respect to the position of the pixel sensor (E) and in units equal to the size of the horizontal/vertical pitch between neighbouring pixel sensors. Thus, when positioned directly upon the pixel sensor (E), the given image part (20) has a position denoted by Cartesian coordinates (0,0), while at any other position not coincident with the pixel sensor (E) the given image part has a position coordinate which is (0.5 x n,0.5 x m), where n,m = 0,1 or -1. Thus, the positions of the given image part represented by the coordinates correspond with net horizontal, vertical or diagonal displacements of the given image part from the position of the pixel sensor (E) to positions adjacent the pixel sensor half way between that pixel sensor and a neighbouring pixel sensor (e.g. any one of pixel sensors A to D, and F to I of Figure 1B or Figure 3).

The signal processing unit (4) of the camera of Figure 1 is arranged to control the displacer unit (9) to displace the whole image (5B) focused by the lens system (2) upon the sensor array (3) by a succession of discrete steps (18). Each such discrete step results in a displacement of any and all given part(s) of the focused image by an amount equal to one half of the inter-pixel pitch of the sensor array such that parts of the image previously falling upon a pixel sensor are displaced to non-sensing inter-pixel regions of the array and, simultaneously, some (but not necessarily all) parts of the image previously falling upon non-sensing inter-pixel regions of the array are displaced to fall on a pixel sensor.

The signal processing unit is arranged to control the displacer unit (9) to cause the image to dwell at each region or position for a time sufficient to allow pixel sensors of the array to generate pixel signals for output from the sensor array and for input to the signal processing unit.

The signal processing unit is arranged (e.g. programmed or programmable) to control the displacer unit to implement a sequence of successive half-pitch steps described above to collectively define a closed path (19) for any given image part such as is illustrated schematically in Figure 2 and Figure 3 which begins and ends at the same location on the pixel sensor array, (such as the location of given pixel sensor E or A). The path incorporates an inter-pixel position between each pixel sensor neighbouring the given pixel sensor.

For example, considering one image part initially positioned at a location coincident with a given pixel sensor (E) at relative position (0.0,0.0), the whole image is displaced such that the given image part is displaced (as indicated by arrow 18) by a first displacement step of half-pitch size to a new position (21) having relative coordinates (0.0,0.5) and is caused to dwell there for a time period sufficient for suitable pixel sensor signals to be generated by the sensor array. Subsequently, the whole image is further displaced by a second displacement step of half-pitch size to position the image part at an inter-pixel position (22) having coordinate (-0.5, 0.5) where at the image part dwells for pixel signal generation before being displaced by a third half-pitch step to a third inter-pixel position (23) with coordinates (-0.5, 0.0) followed by a dwell time for pixel signal generation. Thereafter, the whole image is displaced by a fourth half-pitch step such that the given image part returns to its original position (20) coincident with the location of the given pixel sensor (E) with coordinates (0.0, 0.0). Following pixel signal generation at this fourth location, the image is further displaced to position the given image part at the following succession of positions at each of which the image part dwells to allow pixel signal generation by the whole pixel sensor array:

Table 1

| HALF-PITCH STEP NO. | COORDINATES | LOCATION |
| --- | --- | --- |
| 5 | (0.0, -0.5) | 24 |
| 6 | (0.5, -0.5) | 25 |
| 7 | (0.5, 0.0) | 26 |
| 8 | (0.0, 0.0) | 20 |
| 9 | (0.0. 0.5) | 21 |
| 10 | (0.5, 0.5) | 27 |
| 11 | (0.5, 0.0) | 26 |
| 12 | (0.0, 0.0) | 20 |
| 13 | (0.0, -0.5) | 24 |
| 14 | (-0.5, -0.5) | 28 |
| 15 | (-0.5, 0.0) | 23 |
| 16 | (0.0, 0.0) | 20 |

The cycle may then be repeated by repeating the first to sixteenth steps as desired.

This cyclical pattern of sixteen displacement steps applies to all image parts of the image focused upon the pixel sensor array as they are displaced across that array in common by displacements of the terminal lens (6) of the lens system (2) via displacer unit (9) under the control of the signal processor unit (4).

Of course, the relative coordinate system and path shape (19) described above applies not only to image parts originating/starting at a location coincident with a pixel sensor (such as pixel sensors E or A of Figure 3), but also applies to image parts originating/starting between pixel sensors.

For example, referring to Figure 3, consider the image part (m) originating at an inter-pixel location (300) having a coordinate position (-0.5, 0.5) relative to the pixel sensor (E) illustrated in Figure 2 and corresponding to the top left off-sensor position (22) illustrated in Figure 2.

Prior to any displacement of the image in which the image part (m) is comprised, the image part is located halfway between diagonally opposed pixel sensors (A and E; B and D) of the square sub-array of four neighbouring pixels A, B, E and D of the pixel sensor array. The image part (m) is equidistant from each of the four pixel sensors of the sub-array. When the image is displaced through the cyclical series of sixteen half-pitch displacement steps along the displacement path (19), the image part (m) also progresses along a path defined by a series of corresponding steps between locations upon the pixel sensor array which mirrors the path (19) followed by the image part originating at the pixel sensor E - as do all image parts. The coordinate values of the succession of locations at which the image part (m) dwells is given by the series of coordinate values, relative to pixel E, described above with reference to Figure 2 and in Table 1, but off-set by an amount (-0.5, 0.5) such that the coordinates of the position of the image part (m) resulting from the first half-pitch step of the whole image is (-0.5, 1.0) at a location (301) halfway between pixel sensors A and B. Thus, the image part (m) is displaced from a position (300) equidistant from four neighbouring pixels (A, B, D, E) to occupy other positions directly between any horizontally or vertically aligned pair of those four pixel sensors, such as: a position (301) between horizontally neighbouring pixel sensors A and B; a position (303) between the vertically neighbouring pixel sensors A and D; a position (305) between horizontally neighbouring pixel sensors D and E; a position (307) between a vertically neighbouring pixel sensors E and B.

In stepping between such inter-sensor positions the image part (m) also occupies positions coincident with pixel sensors A, B, D and E respectively. Thus, the image part (m) is caused to dwell at locations on the image sensor array coincident with the position of pixel sensors and positions halfway between pixel sensors, and the pixel processor is arranged to generate an image of the viewed scene using pixel signals generated at each position.

Image resolution is enhanced by using "between sensor" pixel signals generated at the sensor array when the image is displaced to place between pixel sensors an image part which was originally on a pixel sensor (i.e. "on sensor") prior to any image displacement. Of course, some previously "between sensor" image parts are placed "on sensor" at the same time, and are thereby able to cause pixel sensors to generate pixel signals.

The signal processor combines the "between sensor" pixel signals with "on sensor" pixel signals to produce a pixel signal data set from which high resolution images of the viewed scene may be reproduced - i.e. by taking account of image parts which, were it not for displacement of the image, would not otherwise contribute to pixel signals and therefore, would not contribute to the pixel signal data produced for reproducing an image of the scene.

The "between-sensor" pixel signals or data may be combined with the "on-sensor" pixel signals or data, to produce high resolution image signals or data as follows. One method is to feed all the data into appropriate locations in a framestore of size 2M x 2N, where the pixel sensor array has dimensions M x N, and then read out the whole high resolution 2M x 2N image.

The signal processor controls image displacement to ensure that a given image part is not only caused to be displaced "off sensor" but also such that the given image part is caused to fall "on sensor" onto at least two different pixel sensors. This means that not only can the aforementioned pixel signal data be produced during "off sensor" steps as discussed above for resolution enhancement, but also pixel signals associated with the same given image part arising from different pixel sensors may be generated and compared for the purposes of uniformity correction of the pixel signal data from the sensor array.

For example, consider the locations occupied by an image part (m) of Figure 3 during the succession of sixteen displacement steps traversed by the image as a whole and discussed above with respect to the displacement path (19) illustrated in Figures 2 and 3.

In addition to the "between sensor" locations (300, 301, 303, 305 and 307) to which the image part (m) is displaced, it is also displaced to "on sensor" locations (302, 304, 306 and 308) during the course of its traversal of the image displacement path (19). These "on sensor" locations correspond with the positions of four separate pixel sensors (A, D, E and B) forming a square sub-array within which the undisplaced image part (m) is centred (300) and corresponding to both the start and terminal end of the closed displacement path (19) for that image part. The undisplaced "off sensor" position (300) of the given image part (m) corresponds to an outermost displaced position of a different and neighbouring image part having an undisplaced "on-sensor" position (306) upon a pixel sensor (E). Thus when the whole image has been displayed to its second displacement step in the displacement path (19), the neighbouring image part originally "on sensor" at pixel sensor (E) is displaced to the original "off sensor" position (300) of the given image part (m) i.e. position with coordinates (-0.5, 0.5). At the same time, the given image part (m) is displaced to the "on sensor" position (302) at a pixel sensor (A) with relative coordinates (-1.0, 1.0).

Conversely, when the image is displaced at the sixth displacement step and the neighbouring image part falls upon the "off sensor" position (25) having relative coordinates (0.5, -0.5), the given image part (m) falls upon a pixel sensor (E) at relative coordinates (0.0, 0.0). Thus, in the course of the sixteen displacement steps of the image displacement path (19), the given image part is caused to fall upon different neighbouring pixel sensors (A and E). Indeed, also during the course of the same displacement path, the given image part (m) is caused to fall on another pixel sensor B at the tenth step (304) in the displacement path at coordinates (0.0, 1.0), and a further pixel sensor D at the fourteenth step (308) of the displacement path with coordinates (-1.0, 0.0). Thus, during the course of one traversal of the sixteen-step image displacement path (19), the given image part (m) falls once upon each of the four pixel sensors A, B, D and E which collectively define the square sub-array surrounding the undisplaced position (300) of the given image part (m).

Similarly, during the course of the whole displacement path (19) a second given image part (n), having an undisplaced position (0.5, 0.5) equidistant from a second four-pixel sub-array comprising pixel sensors B, F, C and E, is caused to fall successively upon pixel sensors B, F, C then E at steps 2, 6, 10 and 14 respectively of the displacement path. Furthermore, a third given image part (o) having an undisplaced position (-0.5, -0.5) equidistant from a third four-pixel sub-array comprising pixel sensors D, H, E and G is caused to successively fall upon pixel sensors D, H, E then G at steps 2, 6, 10 then 14, respectively, of the displacement path. Finally, a fourth given image part (p) having undisplaced position (0.5, -0.5) equidistant from a fourth four-pixel subarray comprising pixel sensors E, I, F and H is caused to successively fall upon pixel sensors E, I, F then H at steps 2, 6, 10 then 14, respectively, of the displacement path (19).

It is noted that each of these four separate four-pixel sub-arrays contains a common pixel sensor E, at coordinate (0.0, 0.0), as a member.

The signal processor unit Is arranged to calculate the difference between the values of the pixel signals generated:

by pixel sensor E at displacement step 6, and pixel sensors A, B and D each due to the first given image part (m) at displacement steps 6, 2, 10 and 14 respectively;

by pixel sensor E at displacement step 14, and pixel sensors B, F and C each due to the second given image part (n) at displacement steps 14, 2, 6 and 10 respectively;

by pixel sensor E at displacement step 10, and pixel sensors D, H and C due to the third given image part (0) at displacement steps 10, 2, 6 and 14 respectively; by pixel sensor E at displacement step 2, and pixel sensors I, F and H due to the fourth given image part (p) at displacement steps 2, 6, 10 and 14 respectively;

to generate an average of all such differences which represents a "local difference" in pixel sensor response with which to adjust the pixel signal value generated by pixel E. Thus, the pixel signals of the eight neighbouring pixel sensors A to D, F to I surrounding a given pixel sensor E are used to calculate the amount by which the pixel signal of the given pixel sensor E is adjusted to account for pixel signal non-uniformity. The same system and methodology is applied to all such surrounded pixel sensors of the array in an analogous manner.

In the present example the "local difference" value (LD) is given by

$$12 \times LD = \quad (A_m - E_m) + (B_m - E_m) + (D_m - E_m) + (E_m - E_m) \qquad [\text{"m" movement}]$$
$$+(B_n - E_n) + (C_n - E_n) + (E_n - E_n) + (F_n - E_n) \qquad [\text{"n" movement}]$$
$$+(D_o - E_o) + (E_o - E_o) + (G_o - E_o) + (H_o - E_0) \qquad [\text{"o" movement}]$$
$$+(E_p - E_p) + (F_p - E_p) + (H_p - E_p) + (I_p - E_p) \qquad [\text{"p" movement}]$$

where A, B, C, D, E, F, G, H and I represent pixel signal values for pixel sensors A, B, C, D, E, F, G, H and I, respectively and with subscripts m, n, o and p denoting the given image part responsible for the pixel signal in question (i.e. the first, second, third and fourth given image parts respectively).

The signal processor multiplies the local difference value LD by a predetermined scaling factor K (having a value between 1 and 0 inclusive) selected according to the degree of scene movement/change. For example, K = 1 for static noise-free scenes, K = 0 for noisy or highly changeable scenes. The scaled local difference (i.e. KxLD) is then added to the pixel signal value E generated by the pixel sensor E when the image is in an undisplaced state.

The signal processor means is arranged to generate data representing an image of the scene using the responses of pixel sensors of the sensor array, according to not only the aforementioned comparison/difference between pixel sensor responses, but also according to the detected presence of movement of or within the imaged scene. For example, where such movement or motion of or within the scene is detected, the signal processor means is arranged to reduce the scaling factor K applied to a given pixel sensor signal as compared to the magnitude of the adjustment correction signal as would be applied were no motion detected. This reduction may be a reduction by any value within the range 0% to 100% (i.e. K between 0.0 and 1.0, but typically K=0.2) depending on the degree of detected movement and the effect it has on images reproduced/generated according to pixel sensor signals. The value of K may be varied over time as image noise, or movement within the scene, varies.

It is to be understood that this reduction factor assists in balancing the positive effect of correcting for pixel sensor response non-uniformity against the negative effect of motion of the whole or parts of the imaged scene being mistakenly interpreted as pixel sensor response non-uniformity. That is to say, differences in pixel sensor response, as between neighbouring pixels, may be in part due to changes in the common part of the image to which each pixel sensor is caused to respond, as well as (or instead of) being due to inherent response non-uniformity as between those two pixels.

The scheme is responsive to disruption when there is gross motion/change of the scene during the period of the scan pattern. This motion can be detected by comparing the pixel signal values (e.g. $E$, for pixel sensor E) produced by a given pixel sensor at the beginning ($E_{initial}$) and end ($E_{final}$) of a displacement path or scan pattern (19) which originates and terminates at the same pixel sensor location. If no change has occurred in the viewed scene, then substantially the same given image part will fall upon that pixel sensor at the beginning and end of the displacement path and irradiance will be the same thereby leading to the same pixel signal value (i.e. $E_{final} = E_{initial}$). The extent to

which this is not observed (i.e. $E_{final}$ and $E_{initial}$ differ) allows the update of the correction to be suspended or slowed down for the duration of the motion by adjusting the scaling factor K accordingly. These outputs are unchanging when there is no scene motion, but change when there is scene motion.

Thus, the signal processor modifies the pixel signal data representing pixel signals received thereby from pixel sensors according to the aforesaid local difference (LD), to adjust for non-uniformity in neighbouring pixel sensor response such that, were the displacement path (19) to be repeated, the pixel signals from the neighbouring pixels upon which a common given image part would fall (during the course of a displacement path 19) would be represented as being substantially the same.

The present invention thus simultaneously provides scene-based uniformity correction (for both static and moving scenes) and resolution enhancement.

Let the true values of the scene pixels in positions m, n, o and p be $S_m$, $S_n$, $S_o$, $S_p$, so output of any detector, for example **B** when viewing position n, is $B_n = S_n + O_B$ where $O_B$ is the non-uniformity error from detector **B.**

For static scenes this difference is independent of true scene content, since the equation is equivalent to:

$$LD = \{3S_m + O_A + O_B + O_D + 3S_n + O_B + O_C + O_F + 3S_o + O_D + O_G + O_H +$$

$$3S_p + O_F + O_H + O_I - 3[\ S_m + S_n + S_o + S_p + 4O_E]\}/12$$

After calculation the local difference is then multiplied by K and added to the current correction for the pixel signal value E associated with pixel E. The value K has the function of filtering the temporal noise. With no noise K could be set to 1. After several iterations of this process the corrections converge on values that first make the response of each element of the array similar to the average response of its neighbours and after a longer time similar to the average response of the whole array.

The present embodiment of the invention implements a two-dimensional optical micro scanning pattern (19) consisting of half sensor pitch steps, which in total extent covers a complete sensor pitch in both dimensions of the pixel sensor array. The illustrated example of this scan pattern consists of 16 micro-scan steps covering 9 pixel sensor positions and is continuously repeated.

The 16 sub-images obtained from the micro-scan steps are combined into 4 sequential full images. During the build up of the full images, the sub-images are electronically registered to take account of the micro-scan movement. Each full image therefore contains 4 times as many picture elements as the number of elements in the detector. Simultaneously with the construction of the full images, uniformity error data is collected for all the pixel sensor elements.

The 4 sub-images are generated and related to each other in the following way. Consider an ordinary television display (TV), which uses two interlaced fields to produce one frame with twice the number of lines as each field. Consider first 4 positions of the 16-position pattern discussed above. These form an interlaced image similar to an interlaced TV image, but interlaced both horizontally and vertically, rather than just the vertical interlace of the TV. In the present example, four fields make up one frame. Subsequent sets of 4 positions produce similar images.

Local uniformity errors are obtained by comparing the outputs of adjacent pixel sensor elements, as described above, when they view the same physical positions in the scene (i.e. the same given image part). The data for these comparisons is obtained from several micro scanning steps and hence sub-images. Using the local uniformity errors, the pixel sensor non-uniformities can be corrected in one of two ways.

The first correction method is to use a feedback system, where a portion (e.g. scaling factor K) of the local uniformity error (e.g. local difference LD) is removed from the pixel sensor signals and new local uniformity errors (e.g. local difference value LD) measured from the partially corrected images. This method can be considered as a numerical solution for obtaining the required overall uniformity corrections from all the local uniformity errors.

The second method is to analytically solve the problem of obtaining the required overall uniformity corrections from the local uniformity errors. The problem can be transformed into the frequency domain, where it is easier to solve, and the solution transformed back to the spatial domain to directly obtain the uniformity corrections. To prevent spurious effects from temporal noise and moving scenes, temporal filtering is applied to the data collection, the application of the corrections, or both.

A suitable analytical method is based on noting that the matrix of second order local differences LD (see above) is generated by convolving the matrix of non-uniformities NU with a matrix P which is:

$$P = \begin{pmatrix} -1/12 & -1/6 & -1/12 \\ -1/6 & 1 & -1/6 \\ -1/12 & -1/6 & -1/12 \end{pmatrix}$$

# EP 1 920 595 B1

So LD = P*NU where * denotes convolution. Taking Fourier transforms (F) of both sides gives F(LD) = F(P*NU) = F(P)xFN(U) where x denotes multiplication.

Hence F(NU) = F(LD)/F(P)

Hence NU = $F^{-1}$(F(LD)/F(P)), where $F^{-1}$ is an inverse Fourier transform.

The present embodiment may thus provide:

electronic registration and combination of groups of 4 sub-images from the pixel sensor array to form a sequential stream of full images, with each full image containing 4 times the number of picture elements as the sub-images;

calculation of the local uniformity errors for individual detector elements using data from neighbouring elements when they view the same physical position in the field of view;

computation and correction of the overall pattern of detector element uniformity offset errors, where computation of the errors can be either numerical, as in the aforementioned feedback system, or analytical.

This method provides resolution enhancement together with continuous scene based uniformity correction. Thus it eliminates the need to interrupt viewing the scene in order to gather data for uniformity correction updates, and eliminates the complex thermal references and their mechanisms needed when scene based information is not used.

The present invention may be implemented in a thermal imaging camera (1) including an imaging device such as a lens system (2), a two-dimensional array of infrared detectors (3), and signal processing electronics (4). These processing electronics preferably include a numerical store (not shown) of non-uniformity corrections to be applied to each element of the array so as to cause every element of the array to have the same output when viewing the same scene radiance (e.g. given image part).

The numerical store is preferably updated using computations based on the outputs of the members of the detector array as they view the scene.

The processing electronics calculates updates to the local difference values (LD) for each pixel sensor, and stores them in the numerical store. Each update is an improvement to the non-uniformity corrections, and, after several iterations the entries in the numerical store are typically sufficiently accurate.

The pattern or path (19) of motion/displacement of the image moves the image to nine positions left, right, up and down around a central undisturbed position as shown in figures 2 and 3. The amplitude of each motion from the central position is half the pitch of the elements in the detector array. The motion pauses at each position for a time sufficient to read-out the entire array to the processing electronics.

The scan pattern (19) given above may be varied or optimised for the needs of a particular application, e.g. other scan patterns, with a different order of movement or number of steps, can be employed. Such alternative scan patterns could even involve odd multiples of half detector pitch steps.

The described embodiments of the invention are exemplary only and variations and modifications to the described embodiments, such as would be readily apparent to the skilled person, may be made without departing from the scope of the present invention.

## Claims

1. A device (1) for use in imaging a scene including:

a sensor means (3) having an array of pixel sensors (40) each responsive to electromagnetic radiation from the scene to generate a pixel signal;
directing means (2) for directing said electromagnetic radiation for forming an image of the scene upon pixel sensors of the sensor means (3);
displacer means (9) arranged to:

displace, in a repeating cycle, the position of a first part of the image formable upon the sensor means (3) from a position between a group of neighbouring pixel sensors that comprise a first sub-array in the array of pixel sensors to a succession of other positions including positions coinciding with the location of the neighbouring pixel sensors in the first sub-array, and to
displace, in the same repeating cycle, the position of a second part of the image formable upon the sensor means (3) from a position between neighbouring pixel sensors comprising a second sub-array in the array of pixel sensors to a succession of other positions including positions coinciding with the location of the neighbouring pixel sensors in the second sub-array, and to

displace, in the same repeating cycle, the position of a third part of the image formable upon the sensor means (3) from a position between neighbouring pixel sensors comprising a third sub-array in the array of pixel sensors to a succession of other positions including positions coinciding with the location of the neighbouring pixel sensors in the third sub-array, and to

displace, in the same repeating cycle, the position of a fourth part of the image formable upon the sensor means (3) from a position between neighbouring pixel sensors comprising a fourth sub-array in the array of pixel sensors to a succession of other positions including positions coinciding with the location of the neighbouring pixel sensors in the fourth sub-array,

the first sub-array, the second sub-array, the third sub-array and the fourth sub-array sharing a common pixel sensor,

wherein the sensor means (3) is arranged to generate the pixel signals when the first part of the image is at each position in the first sub-array, to generate the pixel signals when the second part of the image is at each said position in the second sub-array, to generate the pixel signals when the third part of the image is at each said position in the third sub-array, and to generate the pixel signals when the fourth part of the image is at each said position in the fourth sub-array for use in generating an image of the scene; and

signal processor means (4) arranged to:

calculate the difference between the pixel signal obtained at the common pixel sensor when the first part of the image coincides with the common pixel sensor and the pixel signal obtained at each one of the other pixel sensors in the first sub-array when the first part of the image coincides with those respective sensors; and to

calculate the difference between the pixel signal obtained at the common pixel sensor when the second part of the image coincides with the common pixel sensor and the pixel signal obtained at each one of the other pixel sensors in the second sub-array when the second part of the image coincides with those respective sensors; and to

calculate the difference between the pixel signal obtained at the common pixel sensor when the third part of the image coincides with the common pixel sensor and the pixel signal obtained at each one of the other pixel sensors in the third sub-array when the third part of the image coincides with those respective sensors; and to

calculate the difference between the pixel signal obtained at the common pixel sensor when the fourth part of the image coincides with the common pixel sensor and the pixel signal obtained at each one of the other pixel sensors in the fourth sub-array when the fourth part of the image coincides with those respective sensors; and to

calculate an average of said differences to give a local difference value for the common pixel sensor, and to adjust the pixel signal for the common pixel sensor according to its calculated local difference value:

wherein the signal processor means (4) is arranged to generate, for each cycle, image data that represents an image of the scene, using responses of pixel sensors both when said first, second, third and fourth image parts were positioned between pixel sensors and when said first, second, third and fourth image parts were positioned at the location of a pixel sensor, thereby to enhance the resolution in the image.

2. A device according to claim 1, wherein the processing means is arranged to multiply the local difference value for each pixel sensor by a predetermined scaling factor selected according to the degree of scene movement or change.

3. A device according to claim 1 or 2, wherein the processing means is arranged to reduce the scaling factor when movement of or motion within a scene is detected.

4. A device according to any preceding claim, wherein the displacer means is operable to successively position one of the first, second, third and fourth parts of the image over a given pixel sensor and the signal processor means is arranged to receive successive pixel signals generated by the given pixel sensor in response to said first, second, third or fourth image part, to compare the successive responses and to indicate the existence of movement of the imaged scene if said successive responses differ by more than a predetermined amount.

5. A device according to any preceding claim, wherein the signal processor means is arranged to apply an iterative process in which pixel sensor signals are partially corrected using local difference values multiplied by a scaling factor to obtain a partially corrected image, and in which new local difference values are measured from the partially corrected image.

6. A device according to any preceding claim in which the directing means is operable to form a focussed image of the scene upon pixel sensors of the sensor means.

7. A device according to any preceding claim in which the displacer means is arranged to move one of the sensor means and the directing means relative to the other so as to displace the position of the first, second, third and fourth parts of the image.

8. A device according to any preceding claim in which the displacer means is arranged to successively reposition the first, second, third and fourth parts of the image in a succession of displacement steps including said positions.

9. A device according to any preceding claim wherein said positions include positions substantially half way between neighbouring pixel sensors.

10. A device according to any preceding claim in which the displacer means is arranged to successively reposition the first, second, third and fourth parts of the image to said other positions in a succession of displacement steps such that each step coincides with the location of any one of: a given pixel sensor; the location of a pixel sensor neighbouring the given pixel sensor, and; the location substantially half way between the given pixel sensor and a neighbouring pixel sensor, wherein the first, second, third and fourth image parts are repositioned to each such location during said succession of displacement steps.

11. A device according to any preceding claim wherein the signal processor means is arranged to receive pixel signals generated by the sensor means when the first, second, third and fourth parts of the image are at each respective position, to compare the responses of pixel sensors to said first, second, third and fourth parts of the image when formed thereupon, and to generate data according to said comparison which represents an image of the scene using the responses of pixel sensors.

12. A device according to claim 11 wherein the signal processing means is arranged to modify according to the comparison the data representing pixel signals received thereby from pixel sensors at which the first, second, third and fourth image parts were positioned, such that the pixel signals are represented as being substantially the same.

13. A device according to any preceding claim in which the sensor means is arranged to control the pixel sensors to be unresponsive to electromagnetic radiation from the scene while the displacer means is displacing said first, second, third and fourth image parts from one position to a succeeding position.

14. A device according to any preceding claim in which the displacer means is operable to hold stationary said first, second, third and fourth parts of the image at each of their respective positions for a finite dwell time sufficient for pixel sensors to respond to the electromagnetic radiation from the scene.

15. A device according to any preceding claim in which the displacer means is operable to displace the first, second, third and fourth parts of the image through a succession of positions starting at a first position, following with one or more different positions, and returning to the first position.

16. A device according to any preceding claim wherein the displacer means is arranged to displace the position of at least a part of the directing means relative to the sensor array thereby to displace the first, second, third and fourth parts of the image formed upon the sensor array.

17. A method for use in imaging a scene including:

providing a sensor means (3) having an array of pixel sensors (40) each responsive to electromagnetic radiation from the scene to generate a pixel signal;
directing said electromagnetic radiation to form an image of the scene upon pixel sensors of the sensor means (3);
displacing, in a repeating cycle, the position of a first part of the image formable upon the sensor means (3) from a position between a group of neighbouring pixel sensors that comprise a first sub-array of the array of pixel sensors to a succession of other positions including positions coinciding with the location of the neighbouring pixel sensors in the first sub-array:

displacing, in the same repeating cycle, the position of a second part of the image formable upon the sensor means (3) from a position between neighbouring pixel sensors comprising a second sub-array in the array of pixel sensors to a succession of other positions including positions coinciding with the location of the neighbouring pixel sensors in the second sub-array,

displacing, in a repeating cycle, the position of a third part of the image formable upon the sensor means (3) from a position between a group of neighbouring pixel sensors that comprise a third sub-array of the array of pixel sensors to a succession of other positions including positions coinciding with the location of the neighbouring pixel sensors in the third sub-array:

displacing, in the same repeating cycle, the position of a fourth part of the image formable upon the sensor means (3) from a position between neighbouring pixel sensors comprising a fourth sub-array in the array of pixel sensors to a succession of other positions including positions coinciding with the location of the neighbouring pixel sensors in the fourth sub-array,

the first sub-array, second sub-array, third sub-array and fourth sub-array sharing a common pixel sensor, and generating the pixel signals when the first part of the image is at each said position in the first sub-array, generating the pixel signals when the second part of the image is at each said position in the second sub-array; generating the pixel signals when the third part of the image is at each said position in the third sub-array and generating the pixel signals when the fourth part of the image is at each said position in the fourth sub-array for use in generating an image of the scene:

calculating the difference between the pixel signal obtained at the common pixel sensor when the first part of the image coincides with the common pixel sensor and the pixel signal obtained at each one of the other pixel sensors in the first sub-array when the first part of the image coincides with those respective sensors; calculating the difference between the pixel signal obtained at the common pixel sensor when the second part of the image coincides with the common pixel sensor and the pixel signal obtained at each one of the other pixel sensors in the second sub-array when the second part of the image coincides with those respective sensors; and calculating the difference between the pixel signal obtained at the common pixel sensor when the third part of the image coincides with the common pixel sensor and the pixel signal obtained at each one of the other pixel sensors in the third sub-array when the third part of the image coincides with those respective sensors; calculating the difference between the pixel signal obtained at the common pixel sensor when the fourth part of the image coincides with the common pixel sensor and the pixel signal obtained at each one of the other pixel sensors in the fourth sub-array when the fourth part of the image coincides with those respective sensors; and calculating an average of said differences to give a local difference value for the common pixel sensor, and adjusting the pixel signal for the common pixel sensor according to its calculated local difference value; and generating, for each cycle, image data that represents an image of the scene, using responses of pixel sensors both when said first, second, third and fourth image parts were positioned between pixel sensors and when said first, second, third and fourth image parts were positioned at the location of a pixel sensor, thereby to enhance the resolution in the image.

**18.** A method according to claim 17, further comprising multiplying the local difference value for each pixel sensor by a predetermined scaling factor selected according to the degree of scene movement or change.

**19.** A method according to claim 18, further comprising reducing the scaling factor when movement of or motion within a scene is detected.

**20.** A method according to any of claims 17 to 19, further comprising successively positioning one of the first, second, third and fourth parts of the image over a given pixel sensor, receiving successive pixel signals generated by the given pixel sensor in response to said first, second, third or fourth image parts, comparing the successive responses and indicating the existence of movement of the imaged scene if said successive responses differ by more than a predetermined amount.

**21.** A method according to any of claims 17 to 20, further comprising applying an iterative process in which pixel sensor signals are partially corrected using local difference values multiplied by a scaling factor to obtain a partially corrected image, and in which new local difference values are measured from the partially corrected image.

**22.** A method according to any of claims 17 to 21 including forming a focussed image of the scene upon pixel sensors of the sensor means.

23. A method according to any of claims 17 to 22 including successively repositioning the first, second, third and fourth parts of the image in a succession of displacement steps including said positions.

24. A method according to any of claims 17 to 23 wherein said positions include positions substantially half way between neighbouring pixel sensors.

25. A method according to any of preceding claims 17 to 24 including successively repositioning the first, second, third and fourth parts of the image to said other positions in a succession of displacement steps such that each step coincides with the location of any one of: a given pixel sensor; the location of a pixel sensor neighbouring the given pixel sensor, and; the location substantially half way between the given pixel sensor and a neighbouring pixel sensor, wherein the first, second, third and fourth image parts are repositioned to each such location during said succession of displacement steps.

26. A method according to any of preceding claims 17 to 25 including receiving pixel signals generated by the sensor means when the first, second, third and fourth parts of the image are at each respective position, comparing the responses of pixel sensors to said first, second, third and fourth parts of the image when formed thereupon, and generating data according to said comparison which represents an image of the scene using the responses of pixel sensors.

27. A method according to claim 26 including modifying according to the comparison the data representing pixel signals received thereby from pixel sensors at which said first, second, third and fourth image parts were positioned, such that the pixel signals are represented as being substantially the same.

28. A method according to any of preceding claims 17 to 27 including controlling the pixel sensors to be unresponsive to electromagnetic radiation from the scene while said first, second, third and fourth image parts are being displaced from one position to a succeeding position.

29. A method according to any of preceding claims 17 to 28 including holding stationary said first, second, third and fourth parts of the image at each of said positions for a finite dwell time sufficient for pixel sensors to respond to the electromagnetic radiation from the scene.

30. A method according to any of preceding claims 17 to 29 including displacing the first, second, third and fourth parts of the image through a succession of positions starting at a first position, following with one or more different positions, and returning to the first position.

31. A method according to any of preceding claims 17 to 30 including providing directing means for directing said electromagnetic radiation to form said image upon said pixel sensors, and displacing the position of at least a part of the directing means relative to the sensor array thereby to displace the first, second, third and fourth parts of the image formed upon the sensor array.

32. An imaging device for forming images from Infra-Red (IR) radiation including a device according to any of claims 1 to 16 wherein said sensor means is responsive to IR radiation, and image display means for generating and displaying an image according to said pixel signals.

33. A method for forming images from Infra-Red (IR) radiation including a method according to any of claims 17 to 31 wherein said sensor means is responsive to IR radiation, the method including generating and displaying an image according to said pixel signals.

**Patentansprüche**

1. Vorrichtung (1) zur Verwendung beim Abbilden einer Szene, die Folgendes umfasst:

    eine Sensoreinrichtung (3) mit einem Array von Pixelsensoren (40), die jeweils auf elektromagnetische Strahlung von der Szene ansprechen, um ein Pixelsignal zu erzeugen;
    eine Richteinrichtung (2) zum Richten der elektromagnetischen Strahlung zum Erzeugen eines Bildes der Szene auf Pixelsensoren der Sensoreinrichtung (3);
eine Verschiebungseinrichtung (9), ausgelegt zum:

Verschieben, in einem sich wiederholenden Zyklus, der Position eines ersten Teils des auf der Sensoreinrichtung (3) bildbaren Bildes von einer Position zwischen einer Gruppe von benachbarten Pixelsensoren, umfassend ein erstes Subarray in dem Array von Pixelsensoren, zu einer Folge von anderen Positionen einschließlich Positionen, die mit dem Ort der benachbarten Pixelsensoren in dem ersten Subarray zusammenfallen, und

Verschieben, in demselben sich wiederholenden Zyklus, der Position eines zweiten Teils des auf der Sensoreinrichtung (3) bildbaren Bildes von einer Position zwischen benachbarten Pixelsensoren, umfassend ein zweites Subarray in dem Array von Pixelsensoren, zu einer Folge von anderen Positionen einschließlich Positionen, die mit dem Ort der benachbarten Pixelsensoren in dem zweiten Subarray zusammenfallen, und

Verschieben, in demselben sich wiederholenden Zyklus, der Position eines dritten Teils des auf der Sensoreinrichtung (3) bildbaren Bildes von einer Position zwischen benachbarten Pixelsensoren, umfassend ein drittes Subarray in dem Array von Pixelsensoren, zu einer Folge von anderen Positionen einschließlich Positionen, die mit dem Ort der benachbarten Pixelsensoren in dem dritten Subarray zusammenfallen, und

Verschieben, in demselben sich wiederholenden Zyklus, der Position eines vierten Teils des auf der Sensoreinrichtung (3) bildbaren Bildes von einer Position zwischen benachbarten Pixelsensoren, umfassend ein viertes Subarray in dem Array von Pixelsensoren, zu einer Folge von anderen Positionen einschließlich Positionen, die mit dem Ort der benachbarten Pixelsensoren in dem vierten Subarray zusammenfallen, wobei das erste Subarray, das zweite Subarray, das dritte Subarray und das vierte Subarray denselben Pixelsensor gemeinsam nutzen,

wobei die Sensoreinrichtung (3) ausgelegt ist zum Erzeugen der Pixelsignale, wenn sich der erste Teil des Bildes an jeder Position in dem ersten Subarray befindet, zum Erzeugen der Pixelsignale, wenn sich der zweite Teil des Bildes an jeder Position in dem zweiten Subarray befindet, zum Erzeugen der Pixelsignale, wenn sich der dritte Teil des Bildes an jeder Position in dem dritten Subarray befindet, und zum Erzeugen der Pixelsignale, wenn sich der vierte Teil des Bildes an jeder Position in dem vierten Subarray befindet, zur Verwendung beim Erzeugen eines Bildes der Szene; und
eine Signalprozessoreinrichtung (4), ausgelegt zum:

Berechnen der Differenz zwischen dem an dem gemeinsamen Pixelsensor erhaltenen Pixelsignal, wenn der erste Teil des Bildes mit dem gemeinsamen Pixelsensor zusammenfällt, und dem an jedem der anderen Pixelsensoren in dem ersten Subarray erhaltenen Pixelsignal, wenn der erste Teil des Bildes mit diesen jeweiligen Sensoren zusammenfällt; und

Berechnen der Differenz zwischen dem an dem gemeinsamen Pixelsensor erhaltenen Pixelsignal, wenn der zweite Teil des Bildes mit dem gemeinsamen Pixelsensor zusammenfällt, und dem an jedem der anderen Pixelsensoren in dem zweiten Subarray erhaltenen Pixelsignal, wenn der zweite Teil des Bildes mit diesen jeweiligen Sensoren zusammenfällt; und

Berechnen der Differenz zwischen dem an dem gemeinsamen Pixelsensor erhaltenen Pixelsignal, wenn der dritte Teil des Bildes mit dem gemeinsamen Pixelsensor zusammenfällt, und dem an jedem der anderen Pixelsensoren in dem dritten Subarray erhaltenen Pixelsignal, wenn der dritte Teil des Bildes mit diesen jeweiligen Sensoren zusammenfällt; und

Berechnen der Differenz zwischen dem an dem gemeinsamen Pixelsensor erhaltenen Pixelsignal, wenn der vierte Teil des Bildes mit dem gemeinsamen Pixelsensor zusammenfällt, und dem an jedem der anderen Pixelsensoren in dem vierten Subarray erhaltenen Pixelsignal, wenn der vierte Teil des Bildes mit diesen jeweiligen Sensoren zusammenfällt; und

Berechnen eines Durchschnitts der Differenzen, um einen lokalen Differenzwert für den gemeinsamen Pixelsensor zu erhalten und um das Pixelsignal für den gemeinsamen Pixelsensor gemäß seinem berechneten lokalen Differenzwert zu justieren:

wobei die Signalprozessoreinrichtung (4) ausgelegt ist zum Erzeugen, für jeden Zyklus, von Bilddaten, die ein Bild der Szene repräsentieren, unter Verwendung von Reaktionen von Pixelsensoren, sowohl wenn der erste, zweite, dritte und vierte Bildteil zwischen Pixelsensoren positioniert waren als auch wenn der erste, zweite, dritte und vierte Bildteil am Ort eines Pixelsensors positioniert waren, um dadurch die Auflösung in dem Bild zu erhöhen.

2. Vorrichtung nach Anspruch 1, wobei die Verarbeitungseinrichtung zum Multiplizieren des lokalen Differenzwertes für jeden Pixelsensor mit einem vorbestimmten Skalierungsfaktor ausgelegt ist, der gemäß dem Grad an Szenenbewegung oder -änderung ausgewählt wurde.

3. Vorrichtung nach Anspruch 1 oder 2, wobei die Verarbeitungseinrichtung zum Reduzieren des Skalierungsfaktors ausgelegt ist, wenn eine Bewegung einer oder eine Bewegung innerhalb einer Szene erkannt wird.

4. Vorrichtung nach einem vorherigen Anspruch, wobei die Verschiebungseinrichtung die Aufgabe hat, eines aus erstem, zweitem, drittem und viertem Teil des Bildes über einen gegebenen Pixelsensor nacheinander zu positionieren, und die Signalprozessoreinrichtung ausgelegt ist zum Empfangen von aufeinander folgenden Pixelsensoren, die von dem gegebenen Pixelsensor als Reaktion auf den ersten, zweiten, dritten oder vierten Bildteil erzeugt wurden, um die aufeinander folgenden Reaktionen zu vergleichen und um das Vorliegen von Bewegung der abgebildeten Szene anzuzeigen, wenn sich die aufeinander folgenden Reaktionen um mehr als einen vorbestimmten Betrag unterscheiden.

5. Vorrichtung nach einem vorherigen Anspruch, wobei die Signalprozessoreinrichtung zum Anwenden eines iterativen Prozesses ausgelegt ist, bei dem Pixelsensorsignale teilweise anhand von lokalen Differenzwerten multipliziert mit einem Skalierungsfaktor korrigiert werden, um ein teilkorrigiertes Bild zu erhalten, und wobei neue lokale Differenzwerte von dem teilkorrigierten Bild gemessen werden.

6. Vorrichtung nach einem vorherigen Anspruch, wobei die Richteinrichtung die Aufgabe hat, ein fokussiertes Bild der Szene auf Pixelsensoren der Sensoreinrichtung zu bilden.

7. Vorrichtung nach einem vorherigen Anspruch, wobei die Verschiebungseinrichtung zum Bewegen der Sensoreinrichtung oder der Richteinrichtung relativ zu dem jeweils anderen ausgelegt ist, um die Position des ersten, zweiten, dritten und vierten Teils des Bildes zu verschieben.

8. Vorrichtung nach einem vorherigen Anspruch, wobei die Verschiebungseinrichtung zum aufeinander folgenden Umpositionieren des ersten, zweiten, dritten und vierten Teils des Bildes in einer Folge von Verschiebungsschritten einschließlich dieser Positionen ausgelegt ist.

9. Vorrichtung nach einem vorherigen Anspruch, wobei die Positionen Positionen im Wesentlichen in der Mitte zwischen benachbarten Pixelsensoren beinhalten.

10. Vorrichtung nach einem vorherigen Anspruch, wobei die Verschiebungseinrichtung zum aufeinander folgenden Umpositionieren des ersten, zweiten, dritten und vierten Teils des Bildes zu anderen Positionen in einer Folge von Verschiebungsschritten ausgelegt ist, so dass jeder Schritt mit dem Ort von einem der Folgenden zusammenfällt: einem gegebenen Pixelsensor; dem Ort eines dem gegebenen Pixelsensor benachbarten Pixelsensors und dem Ort im Wesentlichen in der Mitte zwischen dem gegebenen Pixelsensor und einem benachbarten Pixelsensor, wobei der erste, zweite, dritte und vierte Bildteil zu jedem solchen Ort während der Folge von Verschiebungsschritten umpositioniert werden.

11. Vorrichtung nach einem vorherigen Anspruch, wobei die Signalprozessoreinrichtung ausgelegt ist zum Empfangen von von der Sensoreinrichtung erzeugten Pixelsensoren, wenn sich der erste, zweite, dritte und vierte Teil des Bildes an jeder jeweiligen Position befinden, um die Reaktionen von Pixelsensoren auf den ersten, zweiten, dritten und vierten Teil des Bildes zu vergleichen, wenn es darauf gebildet wird, und zum Erzeugen von Daten gemäß dem Vergleich, die ein Bild der Szene repräsentieren, unter Verwendung der Reaktionen von Pixelsensoren.

12. Vorrichtung nach Anspruch 11, wobei die Signalverarbeitungseinrichtung zum Modifizieren, gemäß dem Vergleich, der Daten ausgelegt ist, die dadurch von Pixelsensoren empfangene Pixelsignale repräsentieren, an denen der erste, zweite, dritte und vierte Bildteil positioniert waren, so dass die Pixelsignale als im Wesentlichen gleich repräsentiert werden.

13. Vorrichtung nach einem vorherigen Anspruch, bei der die Sensoreinrichtung zum Steuern der Pixelsensoren ausgelegt ist, so dass sie nicht auf elektromagnetische Strahlung von der Szene ansprechen, während die Verschiebungseinrichtung den ersten, zweiten, dritten und vierten Bildteil von einer Position zu einer folgenden Position verschiebt.

14. Vorrichtung nach einem vorherigen Anspruch, wobei die Verschiebungseinrichtung die Aufgabe hat, den ersten, zweiten, dritten und vierten Teil des Bildes an jeder seiner jeweiligen Positionen für eine finite Verweilzeit festzuhalten, die ausreicht, damit Pixelsensoren auf die elektromagnetische Strahlung von der Szene reagieren können.

15. Vorrichtung nach einem vorherigen Anspruch, wobei die Verschiebungseinrichtung die Aufgabe hat, den ersten, zweiten, dritten und vierten Teil des Bildes durch eine Folge von Positionen beginnend mit einer ersten Position, gefolgt von einer oder mehreren unterschiedlichen Positionen und zurück zur ersten Position zu verschieben.

16. Vorrichtung nach einem vorherigen Anspruch, wobei die Verschiebungseinrichtung zum Verschieben der Position von wenigstens einem Teil der Richteinrichtung relativ zum Sensorarray ausgelegt ist, um dadurch den ersten, zweiten, dritten und vierten Teil des auf dem Sensorarray gebildeten Bildes zu verschieben.

17. Verfahren zur Verwendung beim Abbilden einer Szene, das Folgendes beinhaltet:

Bereitstellen einer Sensoreinrichtung (3) mit einem Array von Pixelsensoren (40), die jeweils auf elektromagnetische Strahlung von der Szene ansprechen, um ein Pixelsignal zu erzeugen;
Richten der elektromagnetischen Strahlung zum Bilden eines Bildes der Szene auf Pixelsensoren der Sensoreinrichtung (3);
Verschieben, in einem sich wiederholenden Zyklus, der Position eines ersten Teils des auf der Sensoreinrichtung (3) bildbaren Bildes von einer Position zwischen einer Gruppe von benachbarten Pixelsensoren, die ein erstes Subarray des Array von Pixelsensoren umfassen, zu einer Folge von anderen Positionen einschließlich Positionen, die mit dem Ort der benachbarten Pixelsensoren in dem ersten Subarray zusammenfallen;
Verschieben, in demselben sich wiederholenden Zyklus, der Position eines zweiten Teils des auf der Sensoreinrichtung (3) bildbaren Bildes von einer Position zwischen benachbarten Pixelsensoren, umfassend ein zweites Subarray in dem Array von Pixelsensoren, zu einer Folge von anderen Positionen einschließlich Positionen, die mit dem Ort der benachbarten Pixelsensoren in dem zweiten Subarray zusammenfallen,
Verschieben, in einem sich wiederholenden Zyklus, der Position eines dritten Teils des auf der Sensoreinrichtung (3) bildbaren Bildes von einer Position zwischen einer Gruppe von benachbarten Pixelsensoren, umfassend ein drittes Subarray des Array von Pixelsensoren, zu einer Folge von anderen Positionen einschließlich Positionen, die mit dem Ort der benachbarten Pixelsensoren in dem dritten Subarray zusammenfallen;
Verschieben, in demselben sich wiederholenden Zyklus, der Position eines vierten Teils des auf der Sensoreinrichtung (3) bildbaren Bildes von einer Position zwischen benachbarten Pixelsensoren, umfassend ein viertes Subarray in dem Array von Pixelsensoren, zu einer Folge von anderen Positionen einschließlich Positionen, die mit dem Ort der benachbarten Pixelsensoren in dem vierten Subarray zusammenfallen,
wobei das erste Subarray, das zweite Subarray, das dritte Subarray und das vierte Subarray einen gemeinsamen Pixelsensor gemeinsam nutzen, und
Erzeugen der Pixelsignale, wenn sich der erste Teil des Bildes an jeder Position in dem ersten Subarray befindet, Erzeugen der Pixelsignale, wenn sich der zweite Teil des Bildes an jeder Position in dem zweiten Subarray befindet; Erzeugen der Pixelsignale, wenn sich der dritte Teil des Bildes an jeder Position in dem dritten Subarray befindet, und Erzeugen der Pixelsignale, wenn sich der vierte Teil des Bildes an jeder Position in dem vierten Subarray befindet, zur Verwendung beim Erzeugen eines Bildes der Szene:

Berechnen der Differenz zwischen dem an dem gemeinsamen Pixelsensor erhaltenen Pixelsignal, wenn der erste Teil des Bildes mit dem gemeinsamen Pixelsensor zusammenfällt, und dem an jedem der anderen Pixelsensoren in dem ersten Subarray erhaltenen Pixelsignals, wenn der erste Teil des Bildes mit diesen jeweiligen Sensoren zusammenfällt; und
Berechnen der Differenz zwischen dem an dem gemeinsamen Pixelsensor erhaltenen Pixelsignal, wenn der zweite Teil des Bildes mit dem gemeinsamen Pixelsensor zusammenfällt, und dem an jedem der anderen Pixelsensoren in dem zweiten Subarray erhaltenen Pixelsignals, wenn der zweite Teil des Bildes mit diesen jeweiligen Sensoren zusammenfällt; und
Berechnen der Differenz zwischen dem an dem gemeinsamen Pixelsensor erhaltenen Pixelsignal, wenn der dritte Teil des Bildes mit dem gemeinsamen Pixelsensor zusammenfällt, und dem an jedem der anderen Pixelsensoren in dem dritten Subarray erhaltenen Pixelsignals, wenn der dritte Teil des Bildes mit diesen jeweiligen Sensoren zusammenfällt;
Berechnen der Differenz zwischen dem an dem gemeinsamen Pixelsensor erhaltenen Pixelsignal, wenn der vierte Teil des Bildes mit dem gemeinsamen Pixelsensor zusammenfällt, und dem an jedem der anderen Pixelsensoren in dem vierten Subarray erhaltenen Pixelsignals, wenn der vierte Teil des Bildes mit diesen jeweiligen Sensoren zusammenfällt; und
Berechnen eines Durchschnitts der Differenzen, um einen lokalen Differenzwert für den gemeinsamen Pixelsensor zu erhalten, und Justieren des Pixelsignals für den gemeinsamen Pixelsensor gemäß seinem berechneten lokalen Differenzwert; und

Erzeugen, für jeden Zyklus, von Bilddaten, die ein Bild der Szene repräsentieren, unter Verwendung von Reaktionen von Pixelsensoren sowohl dann, wenn der erste, zweite, dritte und vierte Bildteil zwischen Pixelsensoren positioniert waren, als auch dann, wenn sich der erste, zweite, dritte und vierte Bildteil am Ort eines Pixelsensors positioniert waren, um dadurch die Auflösung des Bildes zu erhöhen.

18. Verfahren nach Anspruch 17, das ferner das Multiplizieren des lokalen Differenzwertes für jeden Pixelsensor mit einem vorbestimmten Skalierungsfaktor beinhaltet, der gemäß dem Grad an Szenenbewegung oder -änderung gewählt wurde.

19. Verfahren nach Anspruch 18, das ferner das Reduzieren des Skalierungsfaktors beinhaltet, wenn Bewegung einer oder Bewegung innerhalb einer Szene erkannt wird.

20. Verfahren nach einem der Ansprüche 17 bis 19, das ferner Folgendes beinhaltet: aufeinander folgendes Positionieren von einem aus erstem, zweitem, drittem und viertem Teil des Bildes über einen gegebenen Pixelsensor, Empfangen von aufeinander folgenden Pixeln, die von dem gegebenen Pixelsensor als Reaktion auf den ersten, zweiten, dritten oder vierten Bildteil erzeugt wurden, Vergleichen der aufeinander folgenden Reaktionen und Anzeigen des Vorliegens von Bewegung der abgebildeten Szene, wenn sich die aufeinander folgenden Reaktionen um mehr als einen vorbestimmten Betrag unterscheiden.

21. Verfahren nach einem der Ansprüche 17 bis 20, das ferner das Anwenden eines iterativen Prozesses beinhaltet, in dem Pixelsensorsignale mit lokalen Differenzwerten multipliziert mit einem Skalierungsfaktor teilkorrigiert werden, um ein teilkorrigiertes Bild zu erhalten, und in dem neue lokale Differenzwerte von dem teilkorrigierten Bild gemessen werden.

22. Verfahren nach einem der Ansprüche 17 bis 21, das das Bilden eines fokussierten Bildes der Szene auf Pixelsensoren der Sensoreinrichtung beinhaltet.

23. Verfahren nach einem der Ansprüche 17 bis 22, das das aufeinander folgende Umpositionieren des ersten, zweiten, dritten und vierten Teils des Bildes in einer Folge von Verschiebungsschritten beinhaltet, die die Positionen beinhalten.

24. Verfahren nach einem der Ansprüche 17 bis 23, wobei die Positionen Positionen im Wesentlichen in der Mitte zwischen benachbarten Pixelsensoren beinhalten.

25. Verfahren nach einem der vorherigen Ansprüche 17 bis 24, das das aufeinander folgende Umpositionieren des ersten, zweiten, dritten und vierten Teils des Bildes zu den anderen Positionen in einer Folge von Verschiebungsschritten beinhaltet, so dass jeder Schritt mit dem Ort von einem der Folgenden zusammenfällt: einem gegebenen Pixelsensor; dem Ort eines dem gegebenen Pixelsensor benachbarten Pixelsensors und dem Ort im Wesentlichen in der Mitte zwischen dem gegebenen Pixelsensor und einem benachbarten Pixelsensor, wobei der erste, zweite, dritte und vierte Bildteil jeweils zu jedem solchen Ort während der Folge von Verschiebungsschritten umpositioniert werden.

26. Verfahren nach einem der vorherigen Ansprüche 17 bis 25, das Folgendes beinhaltet: Empfangen von von der Sensoreinrichtung erzeugten Pixelsignalen, wenn sich der erste, zweite, dritte und vierte Teil des Bildes jeweils an jeder jeweiligen Position befinden, Vergleichen der Reaktionen von Pixelsensoren mit dem ersten, zweiten, dritten und vierten Teil des Bildes, falls darauf gebildet, und Erzeugen von Daten gemäß dem Vergleich, die ein Bild der Szene repräsentieren, unter Verwendung der Reaktionen von Pixelsensoren.

27. Verfahren nach Anspruch 26, das das Modifizieren, gemäß dem Vergleich, der Daten beinhaltet, die Pixelsignale repräsentieren, die dadurch von Pixelsensoren empfangen wurden, an denen der erste, zweite, dritte und vierte Bildteil positioniert waren, so dass die Pixelsignale als im Wesentlichen gleich repräsentiert werden.

28. Verfahren nach einem der vorherigen Ansprüche 17 bis 27, das das Steuern der Pixelsensoren beinhaltet, so dass sie nicht auf elektromagnetische Strahlung von der Szene reagieren, während der erste, zweite, dritte und vierte Bildteil von einer Position zu einer folgenden Position verschoben werden.

29. Verfahren nach einem der vorherigen Ansprüche 17 bis 28, das das Festhalten des ersten, zweiten, dritten und vierten Teils des Bildes an jeder der Positionen für eine finite Verweilzeit beinhaltet, die ausreicht, damit Pixelsensoren auf die elektromagnetische Strahlung von der Szene reagieren können.

30. Verfahren nach einem der Ansprüche 17 bis 29, das das Verschieben des ersten, zweiten, dritten und vierten Teils des Bildes durch eine Folge von Positionen beginnend mit einer ersten Position, gefolgt von einer oder mehreren unterschiedlichen Positionen und zurück zur ersten Position beinhaltet.

31. Verfahren nach einem der vorherigen Ansprüche 17 bis 30, das das Bereitstellen einer Richteinrichtung zum Richten der elektromagnetischen Strahlung zum Bilden des Bildes auf den Pixelsensoren und zum Verschieben der Position von wenigstens einem Teil der Richteinrichtung relativ zum Sensorarray beinhaltet, um so den ersten, zweiten, dritten und vierten Teil des auf dem Sensorarray gebildeten Bildes zu verschieben.

32. Abbildungsvorrichtung zum Bilden von Bildern von Infrarot-(IR)-Strahlung, die eine Vorrichtung nach einem der Ansprüche 1 bis 16 beinhaltet, wobei die Sensoreinrichtung auf IR-Strahlung anspricht, und eine Bildanzeigeeinrichtung zum Erzeugen und Anzeigen eines Bildes gemäß den Pixelsignalen.

33. Verfahren zum Bilden von Bildern von Infrarot-(IR)-Strahlung, das ein Verfahren nach einem der Ansprüche 17 bis 31 beinhaltet, wobei die Sensoreinrichtung auf IR-Strahlung anspricht, wobei das Verfahren das Erzeugen und Anzeigen eines Bildes gemäß den Pixelsignalen beinhaltet.

**Revendications**

1. Dispositif (1) destiné à être utilisé dans le cadre de l'imagerie d'une scène, incluant :

un moyen de capteur (3) présentant un réseau de capteurs de pixels (40) répondant chacun à un rayonnement électromagnétique en provenance de la scène en vue de générer un signal de pixel ;
un moyen de direction (2) pour diriger ledit rayonnement électromagnétique en vue de former une image de la scène sur des capteurs de pixels du moyen de capteur (3) ;
un moyen de déplacement (9) agencé de manière à :

déplacer, dans un cycle répétitif, la position d'une première partie de l'image pouvant être formée sur le moyen de capteur (3), d'une position entre un groupe de capteurs de pixels voisins qui comportent un premier sous-réseau dans le réseau de capteurs de pixels à une succession d'autres positions incluant des positions coïncidant avec l'emplacement des capteurs de pixels voisins dans le premier sous-réseau ; et à
déplacer, dans le même cycle répétitif, la position d'une deuxième partie de l'image pouvant être formée sur le moyen de capteur (3), d'une position entre des capteurs de pixels voisins comportant un deuxième sous-réseau dans le réseau de capteurs de pixels à une succession d'autres positions incluant des positions coïncidant avec l'emplacement des capteurs de pixels voisins dans le deuxième sous-réseau ; et à
déplacer, dans le même cycle répétitif, la position d'une troisième partie de l'image pouvant être formée sur le moyen de capteur (3), d'une position entre des capteurs de pixels voisins comportant un troisième sous-réseau dans le réseau de capteurs de pixels à une succession d'autres positions incluant des positions coïncidant avec l'emplacement des capteurs de pixels voisins dans le troisième sous-réseau ; et à
déplacer, dans le même cycle répétitif, la position d'une quatrième partie de l'image pouvant être formée sur le moyen de capteur (3), d'une position entre des capteurs de pixels voisins comportant un quatrième sous-réseau dans le réseau de capteurs de pixels à une succession d'autres positions incluant des positions coïncidant avec l'emplacement des capteurs de pixels voisins dans le quatrième sous-réseau ;

le premier sous-réseau, le deuxième sous-réseau, le troisième sous-réseau et le quatrième sous-réseau partageant un capteur de pixels commun ;
dans lequel le moyen de capteur (3) est agencé de manière à générer les signaux de pixel lorsque la première partie de l'image est à chaque position dans le premier sous-réseau, à générer les signaux de pixel lorsque la deuxième partie de l'image est à chaque dite position dans le deuxième sous-réseau, à générer les signaux de pixel lorsque la troisième partie de l'image est à chaque dite position dans le troisième sous-réseau, et à générer les signaux de pixel lorsque la quatrième partie de l'image est à chaque dite position dans le quatrième sous-réseau à utiliser dans le cadre de la génération d'une image de la scène ; et
un moyen de processeur de signal (4) agencé de manière à :

calculer la différence entre le signal de pixel obtenu au niveau du capteur de pixels commun lorsque la première partie de l'image coïncide avec le capteur de pixels commun et le signal de pixel obtenu au niveau de chacun des autres capteurs de pixels dans le premier sous-réseau lorsque la première partie de l'image coïncide avec ses capteurs respectifs ; et à

calculer la différence entre le signal de pixel obtenu au niveau du capteur de pixels commun lorsque la deuxième partie de l'image coïncide avec le capteur de pixels commun et le signal de pixel obtenu au niveau de chacun des autres capteurs de pixels dans le deuxième sous-réseau lorsque la deuxième partie de l'image coïncide avec ses capteurs respectifs ; et à

calculer la différence entre le signal de pixel obtenu au niveau du capteur de pixels commun lorsque la troisième partie de l'image coïncide avec le capteur de pixels commun et le signal de pixel obtenu au niveau de chacun des autres capteurs de pixels dans le troisième sous-réseau lorsque la troisième partie de l'image coïncide avec ses capteurs respectifs ; et à

calculer la différence entre le signal de pixel obtenu au niveau du capteur de pixels commun lorsque la quatrième partie de l'image coïncide avec le capteur de pixels commun et le signal de pixel obtenu au niveau de chacun des autres capteurs de pixels dans le quatrième sous-réseau lorsque la quatrième partie de l'image coïncide avec ses capteurs respectifs ; et à

calculer une moyenne desdites différences en vue de produire une valeur de différence locale pour le capteur de pixels commun, et ajuster le signal de pixel pour le capteur de pixels commun selon sa valeur de différence locale calculée :

dans lequel le moyen de processeur de signal (4) est agencé de manière à générer, pour chaque cycle, des données d'image qui représentent une image de la scène, en utilisant des réponses de capteurs de pixels à la fois lorsque lesdites première, deuxième, troisième et quatrième parties d'image étaient positionnées entre des capteurs de pixels et lorsque lesdites première, deuxième, troisième et quatrième parties d'image étaient positionnées à l'emplacement d'un capteur de pixels, de manière à améliorer par conséquent la résolution dans l'image.

2. Dispositif selon la revendication 1, dans lequel le moyen de traitement est agencé de manière à multiplier la valeur de différence locale pour chaque capteur de pixels par un facteur de mise à l'échelle prédéterminé sélectionné selon le degré de changement ou de mouvement de scène.

3. Dispositif selon la revendication 1 ou 2, dans lequel le moyen de traitement est agencé de manière à réduire le facteur de mise à l'échelle lorsqu'un mouvement d'une scène ou un déplacement au sein d'une scène est détecté.

4. Dispositif selon l'une quelconque des revendications précédentes, dans lequel le moyen de déplacement est exploitable de manière à positionner successivement l'une des première, deuxième, troisième et quatrième parties de l'image sur un capteur de pixels donné, et le moyen de processeur de signal est agencé de manière à recevoir des signaux de pixel successifs générés par le capteur de pixels donné en réponse à ladite première, deuxième, troisième ou quatrième partie d'image, à comparer les réponses successives, et à indiquer l'existence d'un mouvement de la scène imagée si lesdites réponses successives diffèrent de plus d'une quantité prédéterminée.

5. Dispositif selon l'une quelconque des revendications précédentes, dans lequel le moyen de processeur de signal est agencé de manière à appliquer un processus itératif dans lequel des signaux de capteurs de pixels sont partiellement corrigés en utilisant des valeurs de différence locales multipliées par un facteur de mise à l'échelle en vue d'obtenir une image partiellement corrigée, et dans lesquelles des nouvelles valeurs de différence locales sont mesurées à partir de l'image partiellement corrigée.

6. Dispositif selon l'une quelconque des revendications précédentes, dans lequel le moyen de direction est exploitable de manière à former une image focalisée de la scène sur des capteurs de pixels du moyen de capteur.

7. Dispositif selon l'une quelconque des revendications précédentes, dans lequel le moyen de déplacement est agencé de manière à déplacer l'un du moyen de capteur et du moyen de direction par rapport à l'autre de manière à déplacer la position des première, deuxième, troisième et quatrième parties de l'image.

8. Dispositif selon l'une quelconque des revendications précédentes, dans lequel le moyen de déplacement est agencé de manière à repositionner successivement les première, deuxième, troisième et quatrième parties de l'image dans une succession d'étapes de déplacement incluant lesdites positions.

9. Dispositif selon l'une quelconque des revendications précédentes, dans lequel lesdites positions incluent des positions sensiblement à mi-distance entre des capteurs de pixels voisins.

10. Dispositif selon l'une quelconque des revendications précédentes, dans lequel le moyen de déplacement est agencé de manière à repositionner successivement les première, deuxième, troisième et quatrième parties de l'image auxdites autres positions dans une succession d'étapes de déplacement, de sorte que chaque étape coïncide avec l'emplacement de l'un quelconque parmi : un capteur de pixels donné ; l'emplacement d'un capteur de pixels au voisinage du capteur de pixels donné, et ; l'emplacement sensiblement à mi-distance entre le capteur de pixels donné et un capteur de pixels voisin, dans lequel les première, deuxième, troisième et quatrième parties d'image sont repositionnées à chaque tel emplacement au cours de ladite succession d'étapes de déplacement.

11. Dispositif selon l'une quelconque des revendications précédentes, dans lequel le moyen de processeur de signal est agencé de manière à recevoir des signaux de pixel générés par le moyen de capteur lorsque les première, deuxième, troisième et quatrième parties de l'image sont à chaque position respective, à comparer les réponses de capteurs de pixels auxdites première, deuxième, troisième et quatrième parties de l'image lorsqu'elle est formée sur celles-ci, et à générer des données selon ladite comparaison, lesquelles représentent une image de la scène, en utilisant les réponses de capteurs de pixels.

12. Dispositif selon la revendication 11, dans lequel le moyen de traitement de signal est agencé de manière à modifier, selon la comparaison, les données représentant des signaux de pixel ainsi reçus à partir de capteurs de pixels au niveau desquels les première, deuxième, troisième et quatrième parties d'image étaient positionnées, de sorte que les signaux de pixel sont représentés comment étant sensiblement les mêmes.

13. Dispositif selon l'une quelconque des revendications précédentes, dans lequel le moyen de capteur est agencé de manière à commander aux capteurs de pixels de ne pas réagir à un rayonnement électromagnétique en provenance de la scène tandis que le moyen de déplacement déplace lesdites première, deuxième, troisième et quatrième parties d'image d'une position à une position successive.

14. Dispositif selon l'une quelconque des revendications précédentes, dans lequel le moyen de déplacement est exploitable de manière à maintenir en position stationnaire lesdites première, deuxième, troisième et quatrième parties de l'image, à chacune de leurs positions respectives, pendant un temps de passage fini suffisant pour que les capteurs de pixels répondent au rayonnement électromagnétique en provenance de la scène.

15. Dispositif selon l'une quelconque des revendications précédentes, dans lequel le moyen de déplacement est exploitable de manière à déplacer les première, deuxième, troisième et quatrième parties de l'image à travers une succession de positions, en commençant à une première position, en continuant avec une ou plusieurs positions différentes, et en revenant à la première position.

16. Dispositif selon l'une quelconque des revendications précédentes, dans lequel le moyen de déplacement est agencé de manière à déplacer la position d'au moins une partie du moyen de direction relativement au réseau de capteurs, ce qui permet par conséquent de déplacer les première, deuxième, troisième et quatrième parties de l'image formée sur le réseau de capteurs.

17. Procédé destiné à être utilisé dans le cadre de l'imagerie d'une scène incluant les étapes ci-dessous consistant à :

fournir un moyen de capteur (3) présentant un réseau de capteurs de pixels (40) répondant chacun à un rayonnement électromagnétique en provenance de la scène en vue de générer un signal de pixel ;
diriger ledit rayonnement électromagnétique en vue de former une image de la scène sur des capteurs de pixels du moyen de capteur (3) ;
déplacer, dans un cycle répétitif, la position d'une première partie de l'image pouvant être formée sur le moyen de capteur (3), d'une position entre un groupe de capteurs de pixels voisins qui comportent un premier sous-réseau du réseau de capteurs de pixels à une succession d'autres positions incluant des positions coïncidant avec l'emplacement des capteurs de pixels voisins dans le premier sous-réseau ;
déplacer, dans le même cycle répétitif, la position d'une deuxième partie de l'image pouvant être formée sur le moyen de capteur (3), d'une position entre des capteurs de pixels voisins comportant un deuxième sous-réseau dans le réseau de capteurs de pixels à une succession d'autres positions incluant des positions coïncidant avec l'emplacement des capteurs de pixels voisins dans le deuxième sous-réseau ;
déplacer, dans un cycle répétitif, la position d'une troisième partie de l'image pouvant être formée sur le moyen de capteur (3), d'une position entre un groupe de capteurs de pixels voisins qui comportent un troisième sous-réseau du réseau de capteurs de pixels à une succession d'autres positions incluant des positions coïncidant avec l'emplacement des capteurs de pixels voisins dans le troisième sous-réseau ;

déplacer, dans le même cycle répétitif, la position d'une quatrième partie de l'image pouvant être formée sur le moyen de capteur (3), d'une position entre des capteurs de pixels voisins comportant un quatrième sous-réseau dans le réseau de capteurs de pixels à une succession d'autres positions incluant des positions coïncidant avec l'emplacement des capteurs de pixels voisins dans le quatrième sous-réseau ;

le premier sous-réseau, le deuxième sous-réseau, le troisième sous-réseau et le quatrième sous-réseau partageant un capteur de pixels commun ; et

générer les signaux de pixel lorsque la première partie de l'image est à chaque dite position dans le premier sous-réseau ; générer les signaux de pixel lorsque la deuxième partie de l'image est à chaque dite position dans le deuxième sous-réseau ; générer les signaux de pixel lorsque la troisième partie de l'image est à chaque dite position dans le troisième sous-réseau ; et générer les signaux de pixel lorsque la quatrième partie de l'image est à chaque dite position dans le quatrième sous-réseau, à utiliser dans le cadre de la génération d'une image de la scène ;

calculer la différence entre le signal de pixel obtenu au niveau du capteur de pixels commun lorsque la première partie de l'image coïncide avec le capteur de pixels commun et le signal de pixel obtenu au niveau de chacun des autres capteurs de pixels dans le premier sous-réseau lorsque la première partie de l'image coïncide avec ses capteurs respectifs ;

calculer la différence entre le signal de pixel obtenu au niveau du capteur de pixels commun lorsque la deuxième partie de l'image coïncide avec le capteur de pixels commun et le signal de pixel obtenu au niveau de chacun des autres capteurs de pixels dans le deuxième sous-réseau lorsque la deuxième partie de l'image coïncide avec ses capteurs respectifs ; et

calculer la différence entre le signal de pixel obtenu au niveau du capteur de pixels commun lorsque la troisième partie de l'image coïncide avec le capteur de pixels commun et le signal de pixel obtenu au niveau de chacun des autres capteurs de pixels dans le troisième sous-réseau lorsque la troisième partie de l'image coïncide avec ses capteurs respectifs ;

calculer la différence entre le signal de pixel obtenu au niveau du capteur de pixels commun lorsque la quatrième partie de l'image coïncide avec le capteur de pixels commun et le signal de pixel obtenu au niveau de chacun des autres capteurs de pixels dans le quatrième sous-réseau lorsque la quatrième partie de l'image coïncide avec ses capteurs respectifs ; et

calculer une moyenne desdites différences en vue de produire une valeur de différence locale pour le capteur de pixels commun, et ajuster le signal de pixel pour le capteur de pixels commun selon sa valeur de différence locale calculée ; et

générer, pour chaque cycle, des données d'image qui représentent une image de la scène, en utilisant des réponses de capteurs de pixels à la fois lorsque lesdites première, deuxième, troisième et quatrième parties d'image étaient positionnées entre des capteurs de pixels et lorsque lesdites première, deuxième, troisième et quatrième parties d'image étaient positionnées à l'emplacement d'un capteur de pixels, de manière à améliorer par conséquent la résolution dans l'image.

18. Procédé selon la revendication 17, comportant en outre l'étape consistant à multiplier la valeur de différence locale pour chaque capteur de pixels par un facteur de mise à l'échelle prédéterminé sélectionné selon le degré de changement ou de mouvement de scène.

19. Procédé selon la revendication 18, comportant en outre l'étape consistant à réduire le facteur de mise à l'échelle lorsqu'un mouvement d'une scène ou un déplacement au sein d'une scène est détecté.

20. Procédé selon l'une quelconque des revendications 17 à 19, comportant en outre les étapes consistant à positionner successivement l'une des première, deuxième, troisième et quatrième parties de l'image sur un capteur de pixels donné, à recevoir des signaux de pixel successifs générés par le capteur de pixels donné en réponse à ladite première, deuxième, troisième ou quatrième partie d'image, à comparer les réponses successives, et à indiquer l'existence d'un mouvement de la scène imagée si lesdites réponses successives diffèrent de plus d'une quantité prédéterminée.

21. Procédé selon l'une quelconque des revendications 17 à 20, comportant en outre l'étape consistant à appliquer un processus itératif dans lequel des signaux de capteurs de pixels sont partiellement corrigés en utilisant des valeurs de différence locales multipliées par un facteur de mise à l'échelle en vue d'obtenir une image partiellement corrigée, et dans lesquelles des nouvelles valeurs de différence locales sont mesurées à partir de l'image partiellement corrigée.

22. Procédé selon l'une quelconque des revendications 17 à 21 incluant l'étape consistant à former une image focalisée de la scène sur des capteurs de pixels du moyen de capteur.

23. Procédé selon l'une quelconque des revendications 17 à 22 incluant l'étape consistant à repositionner successivement les première, deuxième, troisième et quatrième parties de l'image dans une succession d'étapes de déplacement incluant lesdites positions.

24. Procédé selon l'une quelconque des revendications 17 à 23, dans lequel lesdites positions incluent des positions sensiblement à mi-distance entre des capteurs de pixels voisins.

25. Procédé selon l'une quelconque des revendications 17 à 24, incluant l'étape consistant à repositionner successivement les première, deuxième, troisième et quatrième parties de l'image auxdites autres positions dans une succession d'étapes de déplacement, de sorte que chaque étape coïncide avec l'emplacement de l'un quelconque parmi : un capteur de pixels donné ; l'emplacement d'un capteur de pixels au voisinage du capteur de pixels donné, et ; l'emplacement sensiblement à mi-distance entre le capteur de pixels donné et un capteur de pixels voisin, dans lequel les première, deuxième, troisième et quatrième parties d'image sont repositionnées à chaque tel emplacement au cours de ladite succession d'étapes de déplacement.

26. Procédé selon l'une quelconque des revendications 17 à 25 incluant les étapes consistant à recevoir des signaux de pixel générés par le moyen de capteur lorsque les première, deuxième, troisième et quatrième parties de l'image sont à chaque position respective, à comparer les réponses de capteurs de pixels auxdites première, deuxième, troisième et quatrième parties de l'image lorsqu'elle est formée sur celles-ci, et à générer des données selon ladite comparaison, lesquelles représentent une image de la scène, en utilisant les réponses de capteurs de pixels.

27. Procédé selon la revendication 26, incluant l'étape consistant à modifier, selon la comparaison, les données représentant des signaux de pixel ainsi reçus à partir de capteurs de pixels au niveau desquels lesdites première, deuxième, troisième et quatrième parties d'image étaient positionnées, de sorte que les signaux de pixel sont représentés comment étant sensiblement les mêmes.

28. Procédé selon l'une quelconque des revendications 17 à 27 incluant l'étape consistant à commander aux capteurs de pixels de ne pas réagir à un rayonnement électromagnétique en provenance de la scène tandis que lesdites première, deuxième, troisième et quatrième parties d'image sont déplacées d'une position à une position successive.

29. Procédé selon l'une quelconque des revendications 17 à 28, incluant l'étape consistant à maintenir en position stationnaire lesdites première, deuxième, troisième et quatrième parties de l'image à chacune desdites positions pendant un temps de passage fini suffisant pour que les capteurs de pixels répondent au rayonnement électromagnétique en provenance de la scène.

30. Procédé selon l'une quelconque des revendications 17 à 29, incluant l'étape consistant à déplacer les première, deuxième, troisième et quatrième parties de l'image à travers une succession de positions en commençant à une première position, en continuant avec une ou plusieurs positions différentes, et en revenant à la première position.

31. Procédé selon l'une quelconque des revendications 17 à 30 incluant les étapes consistant à fournir un moyen de direction pour diriger ledit rayonnement électromagnétique en vue de former ladite image sur lesdits capteurs de pixels, et à déplacer la position d'au moins une partie du moyen de direction relativement au réseau de capteurs, ce qui permet par conséquent de déplacer les première, deuxième, troisième et quatrième parties de l'image formée sur le réseau de capteurs.

32. Dispositif d'imagerie destiné à former des images à partir d'un rayonnement infrarouge (IR) incluant un dispositif selon l'une quelconque des revendications 1 à 16, dans lequel ledit moyen de capteur répond à un rayonnement IR, et un moyen d'affichage d'image pour générer et afficher une image selon lesdits signaux de pixel.

33. Procédé de formation d'images à partir d'un rayonnement infrarouge (IR), incluant un procédé selon l'une quelconque des revendications 17 à 31, dans lequel ledit moyen de capteur répond à un rayonnement IR, le procédé incluant les étapes consistant à générer et à afficher une image selon lesdits signaux de pixel.

**FIG.1A**

**FIG.1B**

**FIG.2**

FIG.3